(19) Europäisches Patentamt
European Patent Office
Office européen des brevets

(11) **EP 4 539 511 A1**

(12) **EUROPEAN PATENT APPLICATION**
published in accordance with Art. 153(4) EPC

(43) Date of publication:
**16.04.2025 Bulletin 2025/16**

(51) International Patent Classification (IPC):
*H04W 4/06* (2009.01)

(21) Application number: **23845227.0**

(52) Cooperative Patent Classification (CPC):
**H04W 4/06; H04W 52/02; H04W 76/27; H04W 76/40**

(22) Date of filing: **29.06.2023**

(86) International application number:
**PCT/CN2023/104264**

(87) International publication number:
**WO 2024/022014 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.07.2022 CN 202210899957**

(71) Applicant: **Huawei Technologies Co., Ltd.**
**Shenzhen, Guangdong 518129 (CN)**

(72) Inventors:
• **SHA, Tong**
**Shenzhen, Guangdong 518129 (CN)**
• **LI, Bingzhao**
**Shenzhen, Guangdong 518129 (CN)**
• **CHANG, Junren**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) Embodiments of this application disclose a communication method and an apparatus. The method includes: A network device sends, to a terminal device that is in an RRC connected state, first information that indicates the terminal device to receive a multicast service in an RRC non-connected state. The terminal device enters the RRC non-connected state, and receives, in the RRC non-connected state, the multicast service via a serving cell of the terminal device in the RRC connected state. This can avoid multicast service interruption caused by a serving cell change due to an RRC state change, to improve continuity of the multicast service.

Terminal device — Network device

604: Second information: Support receiving the multicast service in the RRC non-connected state

605: First configuration information: The terminal device receives the multicast service in the RRC non-connected state

601: First information: Receive a multicast service in an RRC non-connected state

602: Enter the RRC non-connected state

603: Receive the multicast service in the RRC non-connected state via a first cell

FIG. 6

**Description**

This application claims priority to Chinese Patent Application No. 202210899957.9, filed with the China National Intellectual Property Administration on July 28, 2022 and entitled "COMMUNICATION METHOD AND APPARATUS", which is incorporated herein by reference in its entirety.

**TECHNICAL FIELD**

Embodiments of this application relate to the field of communication technologies, and in particular, to a communication method and apparatus.

**BACKGROUND**

In the 3rd generation partnership project (3rd generation partnership project, 3GPP) standard Release (Release, Rel)-17, only a terminal device in a radio resource control (radio resource control, RRC) connected state is supported in receiving a multicast broadcast service (multicast broadcast service, MBS) multicast service. However, when a quantity of terminal devices receiving the MBS multicast service in a cell is excessively large, a quantity of terminal devices that are in the RRC connected state may exceed a quantity of terminal devices that are in the RRC connected state and that can be accommodated in the cell. Therefore, to alleviate network congestion, it is proposed in Rel-18 that the terminal device is supported in receiving the MBS multicast service in an RRC non-connected state, but the terminal device needs to enter the RRC non-connected state from the RRC connected state.

The terminal device enters the RRC non-connected state from the RRC connected state and needs to perform cell selection. When the terminal device selects another cell that meets a cell camping criterion, the terminal device needs to re-obtain multicast service configuration information of the cell, and then receive a multicast service based on a multicast service configuration of the cell. However, re-obtaining the multicast service configuration of the cell and then receiving the multicast service cause multicast service interruption, affecting continuity of the multicast service.

**SUMMARY**

Embodiments of this application disclose a communication method and apparatus, to improve continuity of a multicast service.

According to a first aspect, this application discloses a communication method. The communication method may be applied to a terminal device, may be applied to a module (for example, a chip) in the terminal device, or may be applied to a logical module or software that can implement all or some functions of the terminal device. The following provides descriptions by using an example in which the method is applied to the terminal device. The communication method may include: receiving first information from a network device in an RRC connected state, where the first information indicates the terminal device to receive a multicast service in an RRC non-connected state; entering the RRC non-connected state; and receiving the multicast service in the RRC non-connected state via a first cell, where the first cell is a serving cell of the terminal device in the RRC connected state.

In this embodiment of this application, after the terminal device receives the first information that is from the network device and that indicates the terminal device to receive the multicast service in the RRC non-connected state, after the terminal device enters the RRC non-connected state from the RRC connected state, the terminal device receives the multicast service in the RRC non-connected state via the serving cell that is in the RRC connected state. This can avoid multicast service interruption caused by a serving cell change due to an RRC state change, to improve continuity of the multicast service.

In a possible implementation, the terminal device enters the RRC non-connected state from the RRC connected state and skips performing cell selection.

In this embodiment of this application, the terminal device enters the RRC non-connected state from the RRC connected state and skips performing cell selection. This can avoid a case in which the terminal device performs a cell selection process, and reduce a processing process of the terminal device, to reduce power consumption of the terminal device.

In a possible implementation, that the terminal device skips performing cell selection may include: When the first cell meets a camping condition, a camped cell of the terminal device is the first cell.

In this embodiment of this application, when the first cell meets the camping condition, the camped cell of the terminal device is the first cell. This can ensure that the terminal device camps on the first cell with good signal quality to receive the multicast service, and meets a quality-of-service requirement of the multicast service. This can avoid a case in which the terminal device selects another cell when the serving cell has good coverage, and consequently, the multicast service interruption occurs. In addition, an unnecessary cell selection process can be avoided, to reduce the power consumption of the terminal device.

In a possible implementation, the first information is carried in an RRC release message, and that the terminal device enters the RRC non-connected state may include: entering the RRC non-connected state based on the RRC release message.

In this embodiment of this application, the first information is carried in the RRC release message for transmission. This can avoid using a dedicated message or dedicated signaling to perform transmission of the first information, and reduce a quantity of messages or signaling for the transmission, to save a transmission resource and improve compatibility with an existing protocol. In addition, the first information is carried in the RRC release message. When network congestion occurs (for example, a quantity of multicast terminal devices in the RRC connected state in a cell is greater than a preset threshold, or a quantity of RRC-connected terminal devices in a cell is greater than a preset threshold), the network device indicates, by using the RRC release message, the terminal device to enter the RRC non-connected state, and indicates that a purpose of entering the RRC non-connected state by the terminal device is to receive the multicast service in the RRC non-connected state. Therefore, this can improve efficiency of receiving the multicast service, and is more compatible with the existing protocol.

In a possible implementation, the first information may indicate an identifier of the multicast service or an identifier of an MBS radio bearer (MBS radio bearer, MRB), and the MRB is an MRB associated with the multicast service.

In this embodiment of this application, the terminal device may indicate, by using the first information, the identifier of the multicast service or the identifier of the MRB associated with the multicast service to receive one or more specific multicast services. This can avoid a case in which the terminal device receives all multicast services, and reduce a quantity of multicast services received by the terminal device, to reduce the power consumption of the terminal device.

In a possible implementation, the communication method may further include: receiving first configuration information from the network device, where the first configuration information is used to configure the terminal device to receive the multicast service in the RRC non-connected state. That the terminal device receives the multicast service in the RRC non-connected state via a first cell may include: receiving the multicast service in the RRC non-connected state via the first cell based on the first configuration information.

In this embodiment of this application, the terminal device may receive, in the RRC connected state via the first cell, multicast configuration that is in the RRC non-connected state from the network device, and receive the multicast service via the first cell after entering the RRC non-connected state. The multicast configuration does not need to be re-obtained, to improve the efficiency of receiving the multicast service. Particularly, when the terminal device already receives the multicast service in the RRC connected state, the terminal device can avoid a case in which the multicast service is interrupted because the multicast configuration is re-obtained, to improve the continuity of the multicast service.

In a possible implementation, the first configuration information is further used to configure the terminal device to receive the multicast service in the RRC connected state.

In this embodiment of this application, one piece of configuration information may not only be used by the terminal device to receive the multicast service in the RRC non-connected state, but also may be used by the terminal device to receive the multicast service in the RRC connected state. This can avoid a case in which one piece of configuration information is separately configured in the RRC non-connected state and the RRC connected state, to improve utilization of the configuration information. In addition, a quantity of times of configuration information transmission may be further reduced, and a quantity of times of information transmission may be reduced, to save the transmission resource.

In a possible implementation, the first configuration information is carried in an RRC reconfiguration message.

In this embodiment of this application, the first configuration information is carried in the RRC reconfiguration message for transmission. This can avoid using a dedicated message or dedicated signaling to perform transmission of the first configuration information, and reduce a quantity of messages or signaling for the transmission, to save the transmission resource and improve the compatibility with the existing protocol.

In a possible implementation, the communication method may further include: sending second information to the network device, where the second information indicates that receiving the multicast service in the RRC non-connected state is supported.

In this embodiment of this application, when the terminal device supports receiving the multicast service in the RRC non-connected state, the terminal device may report a capability of the terminal device to the network device, so that the network device can send the first information to the terminal device based on the capability reported by the terminal device. This can avoid a case in which the terminal device does not support receiving the multicast service in the RRC non-connected state and the network device sends the first information to the terminal device.

In a possible implementation, the communication method may further include: obtaining system information from the network device, where the system information is system information needed in the RRC non-connected state.

In this embodiment of this application, the terminal device obtains the system information after entering the RRC non-connected state. This can avoid a case in which the terminal device cannot correctly perform cell reselection because the terminal device misses receiving the system message used in the RRC non-connected state.

In a possible implementation, the RRC non-connected state may include an RRC idle state and/or an RRC inactive state.

In a possible implementation, the communication method may further include: receiving third information from the network device, where the third information indicates to enter the RRC non-connected state from the RRC connected state and skip performing cell selection.

In this embodiment of this application, after receiving the third information that is from the network device and that indicates to enter the RRC non-connected state from the RRC connected state and skip performing cell selection, the terminal device skips performing cell selection after entering the RRC non-connected state. This can avoid a case in which the terminal device performs cell selection and a subsequent process, to reduce the power consumption of the terminal device and improve the continuity of the multicast service.

In a possible implementation, the third information is carried in an RRC release message or an RRC reconfiguration message.

In this embodiment of this application, the third information is carried in the RRC release message or the RRC reconfiguration message for transmission. This can avoid using a dedicated message or dedicated signaling to perform transmission of the third information, and reduce a quantity of messages or signaling for the transmission, to save the transmission resource and improve the compatibility with the existing protocol.

In a possible implementation, the communication method may further include: receiving fourth information from the network device, where the fourth information indicates a frequency priority; and selecting a camped cell in descending order of frequency priorities when performing cell selection.

In this embodiment of this application, after receiving the fourth information that is from the network device and that indicates the frequency priority, the terminal device may select the camped cell in descending order of the frequency priorities when performing cell selection. In addition, when a frequency of the first cell is a frequency with a highest priority, the terminal device may preferentially select the first cell. This can avoid multicast service interruption and reduce the power consumption of the terminal device.

In a possible implementation, the fourth information is carried in a system message or an RRC release message.

In this embodiment of this application, the fourth information is carried in the system message or the RRC release message for transmission. This can avoid using a dedicated message or dedicated signaling to perform transmission of the fourth information, and reduce a quantity of messages or signaling for the transmission, to save the transmission resource and improve the compatibility with the existing protocol.

According to a second aspect, this application discloses a communication method. The communication method may be applied to a network device, may be applied to a module (for example, a chip) in the network device, or may be applied to a logical module or software that can implement all or some functions of the network device. The following provides descriptions by using an example in which the method is applied to the network device. The communication method may include: sending first information to a terminal device that is in an RRC connected state, where the first information indicates the terminal device to receive a multicast service in an RRC non-connected state, the first information is used by the terminal device to receive the multicast service in the RRC non-connected state via a first cell, and the first cell is a camped cell of the terminal device in the RRC connected state.

In this embodiment of this application, the network device sends, to the terminal device, the first information that indicates the terminal device to receive the multicast service in the RRC non-connected state, so that after entering the RRC non-connected state from the RRC connected state, the terminal device receives the multicast service in the RRC non-connected state via a serving cell that is in the RRC connected state. This can avoid multicast service interruption caused by a serving cell change due to an RRC state change of the terminal device, to improve continuity of the multicast service.

In a possible implementation, the first information is further used by the terminal device to enter the RRC non-connected state from the RRC connected state and skip performing cell selection.

In this embodiment of this application, the first information may enable the terminal device to enter the RRC non-connected state from the RRC connected state and skip performing cell selection. This can avoid a case in which the terminal device performs a cell selection process, and reduce a processing process of the terminal device, to reduce power consumption of the terminal device.

In a possible implementation, that the terminal device skips performing cell selection includes: When the first cell meets a camping condition, a camped cell is the first cell.

In this embodiment of this application, when the first cell meets the camping condition, the camped cell of the terminal device is the first cell. This can ensure that the terminal device camps on the first cell with good signal quality to receive the multicast service, and meets a quality-of-service requirement of the multicast service. This can avoid a case in which the terminal device selects another cell when the serving cell has good coverage, and consequently, the multicast service interruption occurs. In addition, an unnecessary cell selection process can be avoided, to reduce the power consumption of the terminal device.

In a possible implementation, the first information is carried in an RRC release message, and the RRC release message is used by the terminal device to enter the RRC non-connected state.

In this embodiment of this application, the first information is carried in the RRC release message for transmission. This can avoid using a dedicated message or dedicated signaling to perform transmission of the first information, and reduce a quantity of messages or signaling for the transmission, to save a transmission resource and improve compatibility with an existing protocol. In addition, the first information is carried in the RRC release message. When network congestion occurs (for example, a quantity of multicast terminal devices in the RRC connected state in a cell is greater than a preset threshold, or a quantity of RRC-connected terminal devices in a cell is greater than a preset threshold), the network device indicates, by using the RRC release message, the terminal device to enter the RRC non-connected state, and indicates that a purpose of entering the RRC non-connected state by the terminal device is to receive the multicast service in the RRC non-connected state. Therefore, this can improve efficiency of receiving the multicast service, and is more compatible with the existing protocol.

In a possible implementation, the first information may indicate an identifier of the multicast service or an identifier of an MRB, and the MRB is an MRB associated with the multicast service.

In this embodiment of this application, the network device may indicate, by using the first information, the identifier of the multicast service or the identifier of the MRB associated with the multicast service to enable the terminal device to receive one or more specific multicast services. This can avoid a case in which the terminal device receives all multicast services, and reduce a quantity of multicast services received by the terminal device, to reduce the power consumption of the terminal device.

In a possible implementation, the communication method may further include: sending first configuration information to the terminal device, where the first configuration information is used to configure the terminal device to receive the multicast service in the RRC non-connected state.

In this embodiment of this application, the network device may configure, by using the first cell, a multicast configuration that is in the RRC non-connected state for the terminal device that is in the RRC connected state, so that after entering the RRC non-connected state, the terminal device may receive the multicast service via the first cell based on the configuration information. The multicast configuration does not need to be re-obtained, to improve the efficiency of receiving the multicast service. Particularly, when the terminal device already receives the multicast service in the RRC connected state, the terminal device can avoid a case in which the multicast service is interrupted because the multicast configuration is re-obtained, to improve the continuity of the multicast service.

In a possible implementation, the first configuration information is further used to configure the terminal device to receive the multicast service in the RRC connected state.

In this embodiment of this application, one piece of configuration information may not only configure the terminal device to receive the multicast service in the RRC non-connected state, but also may configure the terminal device to receive the multicast service in the RRC connected state. This can avoid a case in which one piece of configuration information is separately configured in the RRC non-connected state and the RRC connected state, to improve utilization of the configuration information. In addition, a quantity of times of configuration information transmission may be further reduced, and a quantity of times of information transmission may be reduced, to save the transmission resource.

In a possible implementation, the first configuration information is carried in an RRC reconfiguration message.

In this embodiment of this application, the first configuration information is carried in the RRC reconfiguration message for transmission. This can avoid using a dedicated message or dedicated signaling to perform transmission of the first configuration information, and reduce a quantity of messages or signaling for the transmission, to save the transmission resource and improve the compatibility with the existing protocol.

In a possible implementation, the communication method may further include: receiving second information from the terminal device, where the second information indicates that receiving the multicast service in the RRC non-connected state is supported.

In this embodiment of this application, after receiving a capability reported by the terminal device, the network device may send the first information to the terminal device based on the capability of the terminal device. This can avoid a case in which the terminal device does not support receiving the multicast service in the RRC non-connected state and the network device sends the first information to the terminal device.

In a possible implementation, the communication method may further include: sending system information to the terminal device, where the system information is system information needed in the RRC non-connected state.

In this embodiment of this application, the network device sends, to the terminal device, a system message used in the RRC non-connected state. This can avoid a case in which the terminal device cannot correctly perform cell reselection because the terminal device misses receiving the system message used in the RRC non-connected state.

In a possible implementation, the RRC non-connected state may include an RRC idle state and/or an RRC inactive state.

In a possible implementation, the communication method may further include: sending third information to the terminal device, where the third information indicates to enter the RRC non-connected state from the RRC connected state and skip performing cell selection.

In this embodiment of this application, the network device sends, to the terminal device, the third information that indicates to enter the RRC non-connected state from the RRC connected state and skip performing cell selection, so that the terminal device skips performing cell selection after entering the RRC non-connected state. This can avoid a case in which the terminal device performs cell selection and a subsequent process, to reduce the power consumption of the terminal device and improve the continuity of the multicast service.

In a possible implementation, the third information is carried in an RRC release message or an RRC reconfiguration message.

In this embodiment of this application, the third information is carried in the RRC release message or the RRC reconfiguration message for transmission. This can avoid using a dedicated message or dedicated signaling to perform transmission of the third information, and reduce a quantity of messages or signaling for the transmission, to save the transmission resource and improve the compatibility with the existing protocol.

In a possible implementation, the communication method may further include: sending fourth information to the terminal device that is in the RRC connected state, where the fourth information indicates a frequency priority, and the frequency priority is used by the terminal device to select a camped cell in descending order of frequency priorities when the terminal device performs cell selection.

In this embodiment of this application, the network device sends, to the terminal device, the fourth information that indicates the frequency priority, so that the terminal device selects the camped cell in descending order of the frequency priorities when performing cell selection. In addition, the network device may indicate that a frequency of the first cell is a frequency with a highest priority, so that the terminal device may preferentially select the first cell when performing cell selection. This can avoid the multicast service interruption and reduce the power consumption of the terminal device.

In a possible implementation, the fourth information is carried in a system message or an RRC release message.

In this embodiment of this application, the fourth information is carried in the system message or the RRC release message for transmission. This can avoid using a dedicated message or dedicated signaling to perform transmission of the fourth information, and reduce a quantity of messages or signaling for the transmission, to save the transmission resource and improve the compatibility with the existing protocol.

According to a third aspect, this application discloses a communication method. The communication method may be applied to a terminal device, may be applied to a module (for example, a chip) in the terminal device, or may be applied to a logical module or software that can implement all or some functions of the terminal device. The following provides descriptions by using an example in which the method is applied to the terminal device. The communication method may include: receiving third information from a network device in an RRC connected state, where the third information indicates to enter an RRC non-connected state from the RRC connected state and skip performing cell selection; and entering the RRC non-connected state, where the terminal device enters the RRC non-connected state from the RRC connected state and skips performing cell selection.

In this embodiment of this application, after receiving the third information that is from the network device and that indicates to enter the RRC non-connected state from the RRC connected state and skip performing cell selection, the terminal device enters the RRC non-connected state from the RRC connected state and skips performing cell selection. This can avoid multicast service interruption caused by a serving cell change due to an RRC state change, to improve continuity of the multicast service. In addition, this can avoid a case in which the terminal device performs a cell selection process, and reduce a processing process of the terminal device, to reduce power consumption of the terminal device.

In a possible implementation, that the terminal device skips performing cell selection may include: When a first cell meets a camping condition, a camping cell is the first cell, and the first cell is a serving cell of the terminal device in the RRC connected state.

In this embodiment of this application, when the first cell meets the camping condition, the camped cell of the terminal device is the first cell. This can ensure that the terminal device camps on the first cell with good signal quality to receive the multicast service, and meets a quality-of-service requirement of the multicast service. This can avoid a case in which the terminal device selects another cell when the serving cell has good coverage, and consequently, the multicast service interruption occurs. In addition, an unnecessary cell selection process can be avoided, to reduce the power consumption of the terminal device.

In a possible implementation, the third information is carried in an RRC release message or an RRC reconfiguration message.

In this embodiment of this application, the third information is carried in the RRC release message or the RRC reconfiguration message for transmission. This can avoid using a dedicated message or dedicated signaling to perform transmission of the third information, and reduce a quantity of messages or signaling for the transmission, to save a transmission resource and improve compatibility with the existing protocol.

In a possible implementation, the RRC non-connected state may include an RRC idle state and/or an RRC inactive state.

According to a fourth aspect, this application discloses a communication method. The communication method may be applied to a network device, may be applied to a module (for example, a chip) in the network device, or may be applied to a logical module or software that can implement all or some functions of the network device. The following provides descriptions by using an example in which the method is applied to the network device. The communication method may include: sending third information to a terminal device that is in an RRC connected state, where the third information indicates the terminal device to enter an RRC non-connected state from the RRC connected state and skip performing cell selection.

In this embodiment of this application, the network device sends, to the terminal device, the third information that indicates to enter the RRC non-connected state from the RRC connected state and skip performing cell selection, so that the terminal device enters the RRC non-connected state from the RRC connected state and skips performing cell selection. This can avoid multicast service interruption caused by a serving cell change due to an RRC state change, to improve continuity of a multicast service. In addition, this can further avoid a case in which the terminal device performs a cell selection process, and reduce a processing process of the terminal device, to reduce power consumption of the terminal device.

In a possible implementation, that the terminal device skips performing cell selection may include: When a first cell meets a camping condition, a camped cell is the first cell, and the first cell is a serving cell before the terminal device is in the RRC connected state.

In this embodiment of this application, when the first cell meets the camping condition, the camped cell of the terminal device is the first cell. This can ensure that the terminal device camps on the first cell with good signal quality to receive the multicast service, and meets a quality-of-service requirement of the multicast service. This can avoid a case in which the terminal device selects another cell when the serving cell has good coverage, and consequently, the multicast service interruption occurs. In addition, an unnecessary cell selection process can be avoided, to reduce the power consumption of the terminal device.

In a possible implementation, the third information is carried in an RRC release message or an RRC reconfiguration message.

In this embodiment of this application, the third information is carried in the RRC release message or the RRC reconfiguration message for transmission. This can avoid using a dedicated message or dedicated signaling to perform transmission of the third information, and reduce a quantity of messages or signaling for the transmission, to save a transmission resource and improve compatibility with an existing protocol.

In a possible implementation, the RRC non-connected state may include an RRC idle state and/or an RRC inactive state.

According to a fifth aspect, this application discloses a communication method. The communication method may be applied to a terminal device, may be applied to a module (for example, a chip) in the terminal device, or may be applied to a logical module or software that can implement all or some functions of the terminal device. The following provides descriptions by using an example in which the method is applied to the terminal device. The communication method may include: receiving fourth information from a network device in an RRC connected state, where the fourth information indicates a frequency priority; and selecting a camped cell in descending order of frequency priorities when performing cell selection.

In this embodiment of this application, after receiving the fourth information that is from the network device and that indicates the frequency priority, the terminal device may select the camped cell in descending order of the frequency priorities when performing cell selection. In addition, when a frequency of a serving cell of the terminal device in the RRC connected state is a frequency with a highest priority, the terminal device may preferentially select the cell. This can avoid multicast service interruption caused by a serving cell change due to an RRC change, to improve continuity of a multicast service.

In a possible implementation, the fourth information is carried in a system message or an RRC release message.

In this embodiment of this application, the fourth information is carried in the system message or the RRC release message for transmission. This can avoid using a dedicated message or dedicated signaling to perform transmission of the fourth information, and reduce a quantity of messages or signaling for the transmission, to save a transmission resource and improve compatibility with an existing protocol.

According to a sixth aspect, this application discloses a communication method. The communication method may be applied to a network device, may be applied to a module (for example, a chip) in the network device, or may be applied to a logical module or software that can implement all or some functions of the network device. The following provides descriptions by using an example in which the method is applied to the network device. The communication method may include: sending fourth information to the terminal device that is in an RRC connected state, where the fourth information indicates a frequency priority, and the frequency priority is used by the terminal device to select a camped cell in descending order of frequency priorities when the terminal device performs cell selection.

In this embodiment of this application, the network device sends, to the terminal device that is in the RRC connected state, the fourth information that indicates the frequency priority, so that the terminal device selects the camped cell in descending order of the frequency priorities when performing cell selection. In addition, the network device may indicate that a frequency of a serving cell of the terminal device in the RRC connected state is a frequency with a highest priority, so that the terminal device may preferentially select the cell when performing cell selection. This can avoid multicast service interruption and reduce power consumption of the terminal device.

In a possible implementation, the fourth information is carried in a system message or an RRC release message.

In this embodiment of this application, the fourth information is carried in the system message or the RRC release message for transmission. This can avoid using a dedicated message or dedicated signaling to perform transmission of the fourth information, and reduce a quantity of messages or signaling for the transmission, to save a transmission resource and improve compatibility with an existing protocol.

According to a seventh aspect, this application discloses a communication apparatus. The communication apparatus may be used in a terminal device, may be used in a module (for example, a chip) in the terminal device, or may be used in a logical module or software that can implement all or some functions of the terminal device. The communication apparatus may include:

a transceiver unit, configured to receive first information from a network device in an RRC connected state, where the first information indicates the terminal device to receive a multicast service in an RRC non-connected state; and

a processing unit, configured to enter the RRC non-connected state.

The processing unit is further configured to receive the multicast service in the RRC non-connected state via a first cell, where the first cell is a serving cell of the terminal device in the RRC connected state.

In a possible implementation, the terminal device enters the RRC non-connected state from the RRC connected state and skips performing cell selection.

In a possible implementation, that the terminal device skips performing cell selection may include: When the first cell meets a camping condition, a camped cell of the terminal device is the first cell.

In a possible implementation, the first information is carried in an RRC release message, and that the processing unit enters the RRC non-connected state may include:

entering the RRC non-connected state based on the RRC release message.

In a possible implementation, the first information may indicate an identifier of the multicast service or an identifier of an MRB, and the MRB is an MRB associated with the multicast service.

In a possible implementation, the transceiver unit is further configured to receive first configuration information from the network device, where the first configuration information is used to configure the terminal device to receive the multicast service in the RRC non-connected state.

That the processing unit receives the multicast service in the RRC non-connected state via the first cell may include:

receiving the multicast service in the RRC non-connected state via the first cell based on the first configuration information.

In a possible implementation, the first configuration information is further used to configure the terminal device to receive the multicast service in the RRC connected state.

In a possible implementation, the first configuration information is carried in an RRC reconfiguration message.

In a possible implementation, the transceiver unit is further configured to send second information to the network device, where the second information indicates that receiving the multicast service in the RRC non-connected state is supported.

In a possible implementation, the transceiver unit is further configured to obtain system information from the network device, where the system information is system information needed in the RRC non-connected state.

In a possible implementation, the RRC non-connected state may include an RRC idle state and/or an RRC inactive state.

In a possible implementation, the transceiver unit is further configured to receive third information from the network device, where the third information indicates to enter the RRC non-connected state from the RRC connected state and skip performing cell selection.

In a possible implementation, the third information is carried in an RRC release message or an RRC reconfiguration message.

In a possible implementation, the transceiver unit is further configured to receive fourth information from the network device, where the fourth information indicates a frequency priority.

The processing unit is further configured to select a camped cell in descending order of frequency priorities when performing cell selection.

In a possible implementation, the fourth information is carried in a system message or an RRC release message.

According to an eighth aspect, this application discloses a communication apparatus. The communication apparatus may be used in a network device, may be used in a module (for example, a chip) in the network device, or may be used in a logical module or software that can implement all or some functions of the network device. The communication apparatus may include a processing unit and a transceiver unit.

The transceiver unit is configured to send, under control of the processing unit, first information to a terminal device that is in an RRC connected state, where the first information indicates the terminal device to receive a multicast service in an RRC non-connected state, the first information is used by the terminal device to receive the multicast service in the RRC non-connected state via a first cell, and the first cell is a camped cell of the terminal device in the RRC connected state.

In a possible implementation, the first information is further used by the terminal device to enter the RRC non-connected state from the RRC connected state and skip performing cell selection.

In a possible implementation, that the terminal device skips performing cell selection may include: When the first cell meets a camping condition, a camped cell is the first cell.

In a possible implementation, the first information is carried in an RRC release message, and the RRC release message is used by the terminal device to enter the RRC non-connected state.

In a possible implementation, the first information may indicate an identifier of the multicast service or an identifier of an MRB, and the MRB is an MRB associated with the multicast service.

In a possible implementation, the transceiver unit is further configured to send first configuration information to the terminal device under the control of the processing unit, where the first configuration information is used to configure the terminal device to receive the multicast service in the RRC non-connected state.

In a possible implementation, the first configuration information is further used to configure the terminal device to receive the multicast service in the RRC connected state.

In a possible implementation, the first configuration information is carried in an RRC reconfiguration message.

In a possible implementation, the transceiver unit is further configured to receive second information from the terminal device under the control of the processing unit, where the second information indicates that receiving the multicast service in the RRC non-connected state is supported.

In a possible implementation, the transceiver unit is further configured to send system information to the terminal device under the control of the processing unit, where the system information is system information needed in the RRC non-connected state.

In a possible implementation, the RRC non-connected state may include an RRC idle state and/or an RRC inactive state.

In a possible implementation, the transceiver unit is further configured to send third information to the terminal device under the control of the processing unit, where the third information indicates to enter the RRC non-connected state from the RRC connected state and skip performing cell selection.

In a possible implementation, the third information is carried in an RRC release message or an RRC reconfiguration message.

In a possible implementation, the transceiver unit is further configured to send, under the control of the processing unit, fourth information to the terminal device that is in the RRC connected state, where the fourth information indicates a frequency priority, and the frequency priority is used by the terminal device to select a camped cell in descending order of frequency priorities when the terminal device performs cell selection.

In a possible implementation, the fourth information is carried in a system message or an RRC release message.

According to a ninth aspect, this application discloses a communication apparatus. The communication apparatus may be used in a terminal device, may be used in a module (for example, a chip) in the terminal device, or may be used in a logical module or software that can implement all or some functions of the terminal device. The communication apparatus may include:

a transceiver unit, configured to receive third information from a network device in an RRC connected state, where the third information indicates to enter an RRC non-connected state from the RRC connected state and skip performing cell selection; and
a processing unit, configured to enter the RRC non-connected state, where the terminal device enters the RRC non-connected state from the RRC connected state and skips performing cell selection.

In a possible implementation, that the terminal device skips performing cell selection may include:
When a first cell meets a camping condition, a camping cell is the first cell, and the first cell is a serving cell of the terminal device in the RRC connected state.

In a possible implementation, the third information is carried in an RRC release message or an RRC reconfiguration message.

In a possible implementation, the RRC non-connected state may include an RRC idle state and/or an RRC inactive state.

According to a tenth aspect, this application discloses a communication apparatus. The communication apparatus may be used in a network device, may be used in a module (for example, a chip) in the network device, or may be used in a logical module or software that can implement all or some functions of the network device. The communication apparatus may include a processing unit and a transceiver unit.

The transceiver unit is configured to send, under control of the processing unit, third information to a terminal device that is in an RRC connected state, where the third information indicates the terminal device to enter an RRC non-connected state from the RRC connected state and skip performing cell selection.

In a possible implementation, that the terminal device skips performing cell selection may include: When a first cell meets a camping condition, a camped cell is the first cell, and the first cell is a serving cell before the terminal device is in the RRC connected state.

In a possible implementation, the third information is carried in an RRC release message or an RRC reconfiguration message.

In a possible implementation, the RRC non-connected state may include an RRC idle state and/or an RRC inactive state.

According to an eleventh aspect, this application discloses a communication apparatus. The communication apparatus may be used in a terminal device, may be used in a module (for example, a chip) in the terminal device, or may be used in a logical module or software that can implement all or some functions of the terminal device. The communication apparatus may include:

a transceiver unit, configured to receive fourth information from a network device in an RRC connected state, where the fourth information indicates a frequency priority; and
a processing unit, configured to select a camped cell in descending order of frequency priorities when performing cell selection.

In a possible implementation, the fourth information is carried in a system message or an RRC release message.
According to a twelfth aspect, this application discloses a communication apparatus. The communication apparatus may be used in a network device, may be used in a module (for example, a chip) in the network device, or may be used in a logical module or software that can implement all or some functions of the network device. The communication apparatus may include a processing unit and a transceiver unit.

A transceiver unit is configured to send fourth information to a terminal device under control of the processing unit, where the fourth information indicates a frequency priority, and the frequency priority is used by the terminal device to select a camped cell in descending order of frequency priorities when the terminal device performs cell selection.

In a possible implementation, the fourth information is carried in a system message or an RRC release message.
According to a thirteenth aspect, this application discloses a communication apparatus. The communication apparatus may be a terminal device (or a network device) in the foregoing method embodiments, or a chip or a processor disposed in the terminal device (or the network device). The communication apparatus includes a processor. The processor is coupled to a memory. The memory is configured to store a program or instructions. When the program or the instructions are executed by the processor, the communication apparatus is enabled to perform the method performed by the terminal device (or the network device), or the chip or the processor in the terminal device (or the network device) in the foregoing method embodiments.

According to a fourteenth aspect, this application discloses a communication apparatus. The communication apparatus may be a terminal device (or a network device) in the foregoing method embodiments, or a chip disposed in the terminal device (or the network device). The communication apparatus includes a processor and a memory. The memory is configured to store a program or instructions. When the program or the instructions are executed by the processor, the communication apparatus is enabled to perform the method performed by the terminal device (or the network device), or the chip or the processor in the terminal device (or the network device) in the foregoing method embodiments.

According to a fifteenth aspect, this application discloses a communication apparatus. The communication apparatus may be a terminal device (or a network device) in the foregoing method embodiments, or a chip disposed in the terminal device (or the network device). The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device (or the network device) or the chip in the terminal device (or the network device) in the foregoing method embodiments.

According to a sixteenth aspect, this application discloses a communication system. The communication system may include a terminal device that performs the communication method disclosed in the first aspect (or the third aspect, or the fifth aspect) and a network device that performs the communication method disclosed in the second aspect (or the fourth aspect, or the sixth aspect).

According to a seventeenth aspect, this application discloses a computer-readable storage medium. The computer-readable storage medium stores a computer program or computer instructions, and when the computer program or the computer instructions are run by a processor, the communication method disclosed in the foregoing aspects is implemented.

According to an eighteenth aspect, this application discloses a chip, including a processor, configured to execute a program stored in a memory. When the program is executed, the chip performs the foregoing method.

In a possible implementation, the memory is located outside the chip.

According to a nineteenth aspect, this application discloses a computer program product. The computer program product includes computer program code, and when the computer program code is run by a processor, the foregoing communication method is performed.

Beneficial effects of the seventh aspect to the nineteenth aspect are similar to beneficial effects of the corresponding methods in the first aspect to the sixth aspect. For detailed descriptions, refer to the beneficial effects of the corresponding methods.

## BRIEF DESCRIPTION OF DRAWINGS

FIG. 1 is a diagram of a network architecture according to an embodiment of this application;

FIG. 2 is a diagram of a system architecture of a 5G system according to an embodiment of this application;

FIG. 3 is a diagram of a system architecture of an LTE system according to an embodiment of this application;

FIG. 4 is a diagram of an NE-DC scenario according to an embodiment of this application;

FIG. 5 is a diagram of a CA scenario according to an embodiment of this application;

FIG. 6 is a schematic flowchart of a communication method according to an embodiment of this application;

FIG. 7 is a schematic flowchart of another communication method according to an embodiment of this application;

FIG. 8 is a schematic flowchart of still another communication method according to an embodiment of this application;

FIG. 9 is a diagram of a structure of a communication apparatus according to an embodiment of this application;

FIG. 10 is a diagram of a structure of another communication apparatus according to an embodiment of this application; and

FIG. 11 is a diagram of a structure of still another communication apparatus according to an embodiment of this application.

## DESCRIPTION OF EMBODIMENTS

Embodiments of this application disclose a communication method and apparatus, to improve continuity of a multicast service. Details are separately described below.

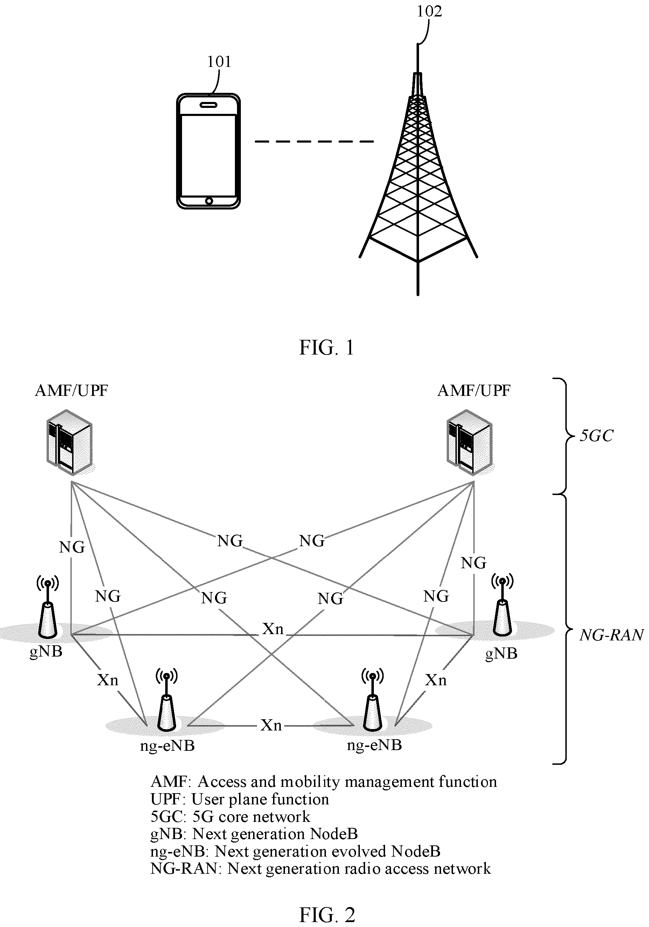

The following first describes a network architecture used in embodiments of this application, to better understand embodiments of this application. FIG. 1 is a diagram of a network architecture according to an embodiment of this application. As shown in FIG. 1, the network architecture may include a terminal device 101 and a network device 102. Communication between the terminal device 101 and the network device 102 may include uplink communication (that is, communication from the terminal device 101 to the network device 102) and downlink communication (that is, communication from the network device 102 to the terminal device 101). In the uplink communication, the terminal device 101 is configured to send an uplink signal to the network device 102; and the network device 102 is configured to receive the uplink signal from the terminal device 101. The uplink signal may be uplink control information, and transmission of the uplink signal may be performed through a physical uplink control channel (physical uplink control channel, PUCCH). Alternatively, the uplink signal may be uplink data, and transmission of the uplink signal may be performed through a physical uplink shared channel (physical uplink share channel, PUSCH). In the downlink communication, the network device 102 is configured to send a downlink signal to the terminal device 101; and the terminal device 101 is configured to receive the downlink signal from the network device 102. The downlink signal may be downlink control information, and transmission of the downlink signal may be performed through a physical downlink control channel (physical downlink control channel, PDCCH). Alternatively, the downlink signal may be downlink data, and transmission of the downlink signal may be performed through a physical downlink shared channel (physical downlink share channel, PDSCH).

The terminal device may be referred to as user equipment (user equipment, UE), a mobile station (mobile station, MS), a mobile terminal (mobile terminal, MT), or the like, and is a device that provides voice and/or data connectivity for a user. The terminal device may be a mobile phone (mobile phone), a handheld terminal, customer premises equipment (customer premises equipment, CPE), a notebook computer, a subscriber unit (subscriber unit), a cellular phone (cellular phone), a smartphone (smartphone), a computing device, a wireless data card, a personal digital assistant (personal digital assistant, PDA) computer, a tablet computer, a computer having a wireless transceiver function, a wireless modem (modem), a tactile terminal device, a handheld (handheld) device, a laptop computer (laptop computer), a session initiation protocol (session initiation protocol, SIP) phone, a cordless phone (cordless phone), or a wireless local loop (wireless local loop, WLL) station, a machine type communication (machine type communication, MTC) terminal, a wearable device (like a smart watch, a smart band, or a pedometer), an in-vehicle terminal device (like a terminal device in a car, a bicycle, an electric vehicle, an airplane, a ship, a train, or a high-speed train), an extended reality (extended reality, XR) terminal device, a virtual reality (virtual reality, VR) terminal device, an augmented reality (augmented reality, AR) terminal device, a wireless terminal in industrial control (industrial control), a smart home device (like a refrigerator, a TV, an air conditioner, or an electric meter), a smart robot, a workshop device, a wireless terminal in self driving (self driving), a wireless terminal in remote medical surgery (remote medical surgery), a wireless data card, a wireless terminal in a smart grid (smart grid), a wireless terminal in transportation safety (transportation safety), a wireless terminal in a smart city (smart city), a wireless terminal in a smart home (smart home), a flight device (like a smart robot, a hot air balloon, an uncrewed aerial vehicle, or an airplane), or another device that can access a network.

In addition, the terminal device may alternatively be a terminal device in a future communication system (for example, a 6th generation (6th generation, 6G) communication system), a terminal device in a future evolved public land mobile network (public land mobile network, PLMN), or the like. For example, a 6G network may further extend a form and a function of a terminal device of 5th generation (5th generation, 5G) communication, and a 6G terminal device includes but is not limited to a vehicle, a cellular network terminal device (integrating a function of a satellite terminal), an uncrewed aerial vehicle, and an internet of things (internet of things, IoT).

The foregoing network device may be an access network device, or may be a core network device.

The access network device is a radio access network (radio access network, RAN) device or node that provides radio access for the terminal device, has a radio transceiver function, and is mainly responsible for functions such as radio resource management, quality of service (quality of service, QoS) flow management, and data compression and encryption on an air interface side. The access network device may include various forms of base stations, for example, a macro base station, a micro base station (also referred to as a small cell), a pico base station, a small cell, a relay station, an access point satellite, and a balloon station. The access network device may further include an evolved NodeB (evolved NodeB, eNB, or eNodeB) in long term evolution (long term evolution, LTE). The access network device may further include a next generation NodeB (next generation NodeB, gNB) or a transmitting and receiving point (transmitting and receiving point, TRP) in a 5G network. The access network device may further include a base station evolved after a 3rd generation partnership (3rd generation partnership project, 3GPP), or a base station in the future evolved PLMN, a broadband network service gateway (broadband network gateway, BNG), a 3GPP aggregation switch or a non-3GPP access device, an access point (access point, AP), a transmitting point (transmitting point, TP), a mobile switching center, or the like in a Wi-Fi system, or may be a device that undertakes a base station function in device-to-device (device-to-device, D2D), vehicle-to-everything (vehicle-to-everything, V2X), or machine-to-machine (machine-to-machine, M2M) communication, or the like.

The core network device is a device in a core network (core network, CN) that provides service support for the terminal device, and is mainly responsible for registration, call connection, charging, mobility management, and providing functions such as user connection, user management, and service bearer completion, data processing, and routing. The core network device may correspond to different devices in different communication systems, for example, in a 4th generation (4th generation, 4G) communication system, may correspond to one or more of a mobility management entity (mobility management entity, MME), a serving gateway (serving gateway, S-GW), and the like. For another example, in a 5G communication system, the core network device may correspond to one or more network elements of an access and mobility management function (access and mobility management function, AMF) network element, a session management function (session management function, SMF) network element, a user plane function (user plane function, UPF) network element, and the like. In a next generation communication system or a future communication system, the core network device may be one or more network elements, devices, or entities that provide the service support for the terminal device.

It should be noted that the network architecture shown in FIG. 1 is not limited to including only the terminal device 101 and the network device 102 shown in the figure, and may further include another terminal device and network device that are not represented in the figure. Details are not listed herein in this application.

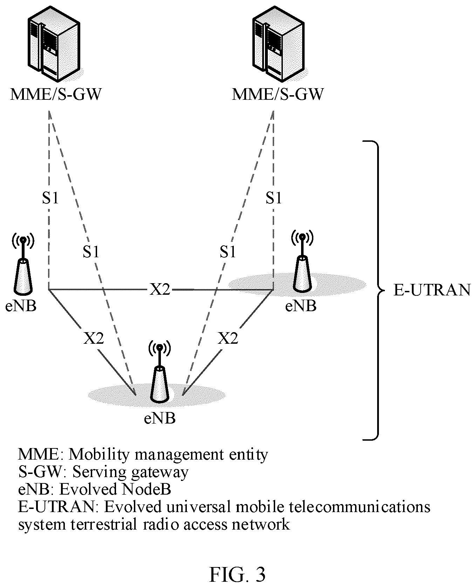

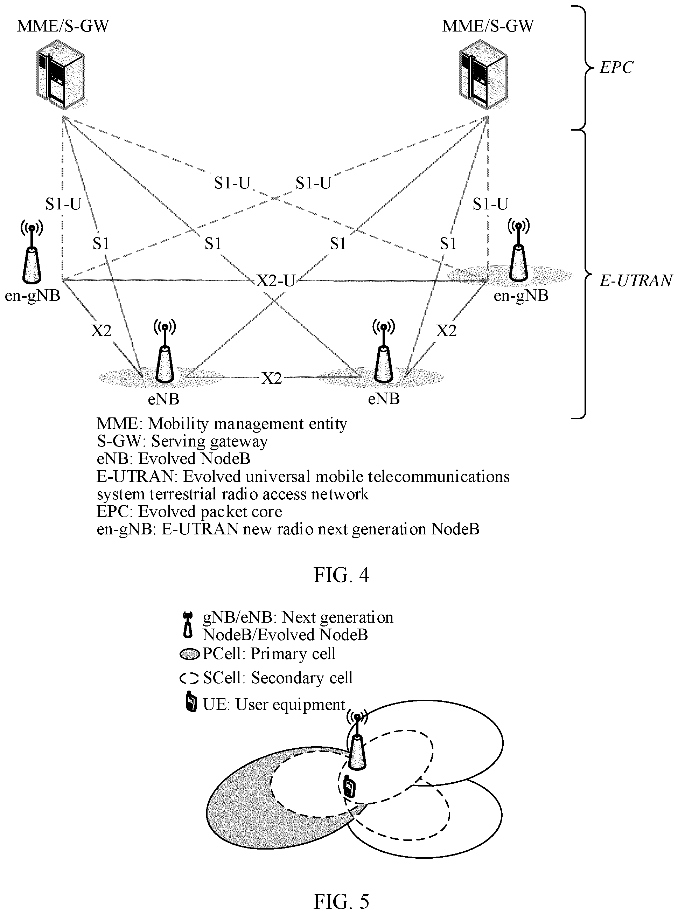

The foregoing network architecture may be applied to a 5G system. For example, a system architecture of the 5G system may be shown in FIG. 2. The foregoing network architecture may also be applied to an LTE system. For example, a system architecture of the LTE system may be shown in FIG. 3. The foregoing network architecture may be applied to an independent deployment (that is, independent networking) 5G system or LTE system, or may be applied to a non-independent deployment (that is, non-independent networking) 5G system or LTE system, for example, a dual connectivity (dual connectivity, DC) scenario, a carrier aggregation (carrier aggregation, CA) scenario, and the like. The DC scenario may include a next generation (next generation, NG) EN-DC, an NE-DC, and a new wireless (new radio, NR)-DC. E in EN and NE represents an evolved universal mobile telecommunications system (universal mobile telecommunications system, UMTS) terrestrial radio access network (evolved UMTS terrestrial radio access network, E-UTRAN), that is, a 4G radio access network, and N represents NR. For example, a diagram of the NE-DC scenario may be shown in FIG. 4. For example, a diagram of the CA scenario may be shown in FIG. 5.

The foregoing network architecture may be applied to a narrowband internet of things (narrow band- internet of things, NB-IoT) system, a global system for mobile communications (global system for mobile communications, GSM) system, an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, and a communication system like a 6G system evolved after 5G.

The following first describes a related technology in embodiments of this application, to better understand embodiments of this application.

1. RRC state

In 5G NR, a terminal device has three RRC states: an RRC connected state (RRC connected state), an RRC idle state (RRC idle state), and an RRC inactive state (RRC inactive state). In the RRC connected state, an RRC connection is established between the terminal device and an access network device, and transmission of signaling and data may be performed between the terminal device and the access network device. When no data transmission needs to be performed between the terminal device and the access network device, the access network device may release the terminal device to the RRC idle state. In the RRC idle state, there is no RRC connection between the access network device and the terminal device. In this case, there is no data transmission or RRC signaling connection between the terminal device and the access network device. The RRC inactive state is introduced in NR. A terminal device in the RRC inactive state generally stops data transmission (a terminal may also perform small packet transmission or the like in the RRC inactive state), but the access network device still maintains context information of the terminal device. An advantage of introducing the RRC inactive state is that, in comparison with a terminal device in an RRC idle state, the access network device in the RRC inactive state still retains the context information of the terminal device, and therefore the RRC connected state can be restored more quickly. When a service arrives, a service transmission delay can be reduced. In addition, in comparison with the terminal device in the RRC connected state, the terminal device in the RRC inactive state has lower power consumption (which may be similar to that in the RRC idle state). Therefore, this also helps save energy of the terminal device.

The access network device may release the terminal device to the RRC idle state or the RRC inactive state by sending an RRC release (release) message to the terminal device. When the RRC release message received by the terminal device includes a suspend configuration (suspendConfig), the terminal device enters the RRC inactive state, and performs a cell selection procedure. When the RRC release message received by the terminal device does not include suspendConfig, except in scenarios such as an evolved packet system (evolved packet system, EPS) fallback (fallback) of an internet protocol (internet protocol, IP) multimedia subsystem (IP multimedia subsystem, IMS) voice (voice) and inter-system cell reselection, the terminal device enters the RRC idle state, and performs the cell selection procedure.

2. Cell selection and cell reselection

Cell selection

When the terminal device that is in the RRC connected state receives the RRC release message, the terminal device enters the RRC idle state or the RRC inactive state and performs cell selection, to select a suitable cell or an acceptable cell for camping. The terminal device may determine, based on a cell selection criterion (cell selection criterion) (also referred to as an S criterion) and by using parameters such as cell receive power and cell receive quality, whether the cell is suitable for access. Conditions for meeting the S criterion are as follows:

$$S_{rxlev} > 0 \text{ and } S_{qual} > 0$$

$S_{rxlev}$ is a cell selection receive power value (cell selection RX level value) in a unit of decibel (decibel, dB), and $S_{qual}$ is a cell selection quality value (cell selection quality value) in a unit of dB. $S_{rxlev}$ and $S_{qual}$ may be represented as follows:

$$S_{rxlev} = Q_{rxlevmeas} - (Q_{rxlevmin} + Q_{rxlevminoffset}) - P_{compensation} - Qoffset_{temp}$$

$$S_{qual} = Q_{qualmeas} - (Q_{qualmin} + Q_{qualminoffset}) - Qoffset_{temp}$$

$Q_{rxlevmeas}$ is a measured cell receive power value, $Q_{rxlevmin}$ is a minimum receive power value needed by a cell, $Q_{rxlevminoffset}$ is an offset value of $Q_{rxlevmin}$, $P_{compensation}$ is a power compensation value, $Qoffset_{temp}$ is an offset value applied to the cell, $Q_{qualmeas}$ is a measured cell quality value, $Q_{qualmin}$ is a minimum quality value needed by the cell, and

$Q_{qualminoffset}$ is an offset value of $Q_{qualmin}$.

When performing cell selection, UE may perform one of the following two processes.

First process: initial cell selection (the terminal device does not have prior information of a radio frequency (radio frequency, RF) channel and an NR frequency)

The terminal device scans all RF channels in an NR frequency band (band) based on a capability of the terminal device. On each frequency other than a shared spectrum, the terminal device needs to search for only a cell with a strongest signal. Once a suitable cell (that is, a cell that meets the S criterion) is found, the terminal device selects the cell.

Second process: selecting a cell by using stored information

In this process, frequency information stored in the terminal device needs to be used. The frequency information is from previously received measurement control information or from previously detected cell parameter information. Optionally, the frequency information further needs to be from previously received information about cell parameters. Once the suitable cell (that is, the cell that meets the S criterion) is found, the terminal device selects the cell. If no suitable cell is found, an initial cell selection procedure may be started.

After performing cell selection, the terminal device starts a system message obtaining procedure.

**Cell** reselection

A terminal device in the RRC idle/inactive state measures signal quality of a serving cell and a neighboring cell. If the signal quality of the serving cell is worse, but the signal quality of the neighboring cell is better, the terminal device actively reselects a cell with a higher priority or better signal quality as the serving cell. This process is referred to as cell reselection. The cell reselection procedure consists of three phases: starting neighboring cell measurement (determining, based on a measurement starting condition, whether to start the neighboring cell measurement), reselection evaluation and decision (deciding whether the signal quality of the neighboring cell meets a cell reselection criterion, and performing cell reselection if the signal quality meets the criterion, or camping on a current cell if the signal quality does not meet the criterion), and performing cell reselection (receiving a system message of a target cell and camping on a new cell if the target cell has no access restriction). The following separately provides descriptions.

First phase: starting neighboring cell measurement

It may be determined, based on the measurement starting condition, whether to start the neighboring cell measurement. If the measurement starting condition is met, the terminal device may start to measure cell quality of a corresponding neighboring cell. It may be determined, based on a reselection priority of the neighboring cell (or a priority of a frequency of the neighboring cell) and cell quality of a serving cell, whether the neighboring cell meets the measurement starting condition. It should be understood that the neighboring cell is a cell adjacent to the serving cell or a broadcast cell.

When the reselection priority of the neighboring cell is higher than a reselection priority of the serving cell, the neighboring cell measurement can be started unconditionally. In other words, the neighboring cell measurement is started directly. When the reselection priority of the neighboring cell is lower than or equal to the reselection priority of the serving cell, the cell quality of the serving cell may be measured first, and then the cell quality of the serving cell may be compared with a cell quality threshold delivered by a network. When the cell quality of the serving cell is greater than or equal to (or equal to) the cell quality threshold, the neighboring cell measurement may not be started. When the cell quality of the serving cell is less than (or less than or equal to) the cell quality threshold, the neighboring cell measurement may be started.

Second phase: reselection evaluation decision

After the neighboring cell measurement is completed, the terminal device may start to evaluate whether to perform cell reselection to the neighboring cell. The reselection evaluation decision varies according to the reselection priority of the neighboring cell.

For a neighboring cell with a high reselection priority, in other words, for the neighboring cell whose reselection priority is higher than the reselection priority of the serving cell, when the terminal device camps on the current serving cell for more than one second, and duration for which the cell quality of the neighboring cell meets a specific threshold exceeds specific duration, cell reselection to the neighboring cell with the high reselection priority may be performed. During reselection of the cell with the high reselection priority, if a plurality of cells with a same frequency reselection priority meet the reselection criterion, these cells can be sorted according to the cell reselection criterion (an R criterion). This problem is converted to an intra-frequency reselection problem and a cell with a highest ranking is selected.

The R criterion is as follows: A cell quality level $R_s$ of a serving cell and a cell quality level $R_n$ of each cell (that is, each neighboring cell) adjacent to the serving cell are calculated. Then, the serving cell and the neighboring cell of the serving cell may be sorted based on the cell quality levels, and a cell with a highest quality level or a quality level close to a highest quality level may be selected. Finally, among selected cells, a cell with a largest quantity of beams whose beam signal quality meets a requirement may be selected as a best cell. In addition, it may be referred to as that the cell meets the cell reselection criterion. $R_s$ and $R_n$ may be represented as follows:

$$R_s = Q_{meas,s} + Q_{hyst} - Qoffset_{temp}$$

$$R_n = Q_{meas,n} + Qoffset - Qoffset_{temp}$$

$Q_{meas,s}$ is a measured receive power value of a serving cell, $Q_{hyst}$ is a cell reselection hysteresis value, $Qoffset_{temp}$ is an additional offset for cell selection and reselection, and is temporarily used when an RRC connection fails to be established, $Q_{meas,n}$ is a measured receive power value of a neighboring cell, and $Qoffset$ is an offset between the serving cell and the neighboring cell.

For a neighboring cell with an equal (that is, a same) reselection priority, in other words, for the neighboring cell whose reselection priority is equal to the reselection priority of the serving cell, the cell reselection may be performed according to the R criterion. To be specific, cell signal quality levels of each neighboring cell and a current serving cell that meet a cell selection standard are calculated. Then, based on cell signal quality level sorting, a cell with a highest cell signal quality level is selected or a cell with a signal quality level close to a highest cell signal quality level within a specific range is selected under a multi-beam operation, and a cell with a largest quantity of beams whose beam signal quality meets a requirement is selected from these cells as the best cell. If the best cell continuously meets the cell reselection criterion within a specific duration interval, and the terminal device camps on the current serving cell for more than 1s, the terminal device starts cell reselection to the neighboring cell.

For a neighboring cell with a low reselection priority, in other words, for the neighboring cell whose reselection priority is lower than the reselection priority of the serving cell, if the terminal device camps on the serving cell for more than one second, the cell quality of the serving cell is lower than a specific threshold, and duration for which cell quality of the neighboring cell with the low reselection priority meets another specific threshold exceeds specific duration, cell reselection to the neighboring cell with the low reselection priority is performed.

If a plurality of cells with different reselection priorities meet the cell reselection criterion, cell reselection of a frequency with a higher reselection priority should precede over cell reselection of a frequency with a lower reselection priority, in other words, the terminal device preferentially reselects a cell of the frequency with the higher reselection priority.

Third phase: performing cell reselection

After completing the neighboring cell measurement and determining that a neighboring cell meeting a cell reselection condition exists, the terminal device may start to attempt to camp on a new cell. The terminal device needs to receive a system message from a target neighboring cell, and then may determine, based on the system message, whether a camping condition of the neighboring cell is met. The determining may include determining whether the target neighboring cell allows access of the terminal device, and the like. When determining that the terminal device does not meet a camping condition of the target neighboring cell (including that the target neighboring cell forbids the terminal device to access), the terminal device may exclude the target neighboring cell from being a candidate cell for 300 seconds (or a maximum of 300 seconds). When determining that the terminal device meets the camping condition of the target neighboring cell (including that the target neighboring cell allows the access of the terminal device), the terminal device may camp on the target neighboring cell.

The cell reselection priority is related to a frequency of a cell. Cells of a same frequency of a same radio access technology (radio access technology, RAT) have a same cell reselection priority, and cells of different frequencies may have a same cell reselection priority or different cell reselection priorities. To be specific, intra-frequency neighboring cells have a same cell priority. Inter-frequency cells are classified into a high-priority neighboring cell, a same-priority neighboring cell, and a low-priority neighboring cell. A network may configure a frequency priority in a cell reselection process. The cell reselection priority may be sent to the terminal device by using the system message (cell-specific cell reselection), or may be sent to the terminal device by using dedicated signaling (for example, an RRC release message).

3. MBS broadcast

A broadcast communication service is a communication service that provides a same service and same specific content data for all terminal devices in a broadcast coverage area, in other words, all terminal devices in the broadcast coverage area can receive data. In the NR MBS, broadcast supports receiving in the RRC idle state, the RRC inactive state, and the RRC connected state. The broadcast uses a point-to-multipoint (point-to-multipoint, PTM) transmission manner. To be specific, one access network device may send one MBS data packet to a plurality of terminal devices through an air interface, and the terminal device may decode, by using a common radio network temporary identifier (radio network temporary identifier, RNTI), for example, a group radio network temporary identifier (group radio network temporary identifier, G-RNTI), downlink data of a broadcast session scheduled by the access network device.

In the NR MBS broadcast, two-step configuration is used. The access network device may broadcast a system information block (system information block, SIB) 20. The system information block 20 carries MBS control channel (MBS control channel, MCCH) configurations used for MBS broadcast, including a repetition periodicity and an offset of the MCCH, duration of an MCCH window, an MCCH window start slot, an MCCH modification periodicity, and the like. Transmission of an MCCH message (or information sent through an MCCH channel) is performed periodically, and is performed in a configured MCCH transmission window based on a configured repetition periodicity. The MCCH is configured per cell (per cell). In Rel-17, each cell has only one type of MCCH configuration.

The MCCH carries MBS broadcast configuration information, provides a list of MBS broadcast sessions being provided by the cell, for each provided MBS broadcast session, provides, for example, an identifier (identifier, ID) (temporary multicast group identifier (temporary multicast group identifier, TMGI)) of the broadcast session and a G-RNTI, and optionally provides, for example, a broadcast MRB configuration, a discontinuous reception (discontinuous reception, DRX) configuration of an MBS traffic channel (multicast traffic channel (MBS traffic channel, MTCH)), and a list of neighboring cells that can provide the broadcast session.

When the terminal device is interested in receiving an MBS broadcast service, the terminal device should perform an MCCH information obtaining process. A terminal device interested in receiving the MBS broadcast service should apply the MCCH information obtaining process when entering a cell providing the SIB 20 (for example, when the terminal device is powered on and after the terminal device moves to another cell) and when receiving an MCCH change notification due to start of a new MBS service.

4. MBS multicast

In Rel-17, NR MBS multicast supports receiving the MBS multicast service only by the terminal device in the RRC connected state. In the MBS multicast, point-to-point (point-to-point, PTP) transmission may be used, or PTM transmission may be used. Typical multicast service scenarios include, for example, public security and mission critical (mission critical), interactive protocol television (internet protocol television, IPTV), and live video. A terminal device that receives the MBS multicast service can accept an MBS multicast service (or an MBS session (session)) only after performing an authentication procedure with a core network. Each MBS session is identified by using a TMGI. On the air interface, the terminal device receives, by using dedicated signaling (for example, an RRC reconfiguration message), a connected-state multicast configuration delivered by the access network device, for example, a multicast MRB configuration. Each MBS multicast session may be associated with one or more multicast MRBs. The multicast MRB configuration includes TMGI information to indicate a multicast session associated with the multicast MRB.

However, when a quantity of terminal devices receiving the MBS multicast service in a cell is excessively large, a quantity of terminal devices that are in the RRC connected state and that can be accommodated in the cell may be exceeded. Therefore, in Rel-18, to alleviate network congestion, it is proposed that the terminal device is supported in receiving the MBS multicast service in the RRC inactive state. For example, when the terminal device does not have a unicast service and has only a multicast service, the network may release the terminal device to the RRC inactive state to receive the multicast service. This not only helps alleviate network congestion, but also helps save energy of the terminal device.

The terminal device obtains a multicast configuration in the RRC inactive state in the following possible manners (but not limited to the following manners): In one manner similar to Rel-17 broadcast, the terminal device obtains a configuration of one or more multicast control channels by using the system message, and obtains a PTM configuration of multicast in the RRC inactive state through the multicast control channel. The multicast control channel may be a specific logical channel, and may be identified by using a specific logical channel ID. The other manner is similar to Rel-17 multicast. The terminal device obtains an RRC inactive-state multicast configuration in the RRC connected state by using the dedicated signaling (for example, by using the RRC reconfiguration message).

However, because the terminal device in the RRC inactive state cannot provide an uplink feedback, for a terminal device in the RRC inactive state with poor coverage, multicast service performance (for example, a data packet decoding success rate) deteriorates. To ensure performance of receiving the multicast in the RRC inactive state, it is proposed that the network release only a multicast terminal device with good coverage to the RRC inactive state to receive the multicast.

When the terminal device receives the RRC release message (including suspendConfig) delivered by the network to indicate to enter the RRC inactive state, the terminal device enters the RRC inactive state and performs cell selection. When the terminal device selects another cell that meets the S criterion, the terminal device needs to re-obtain an RRC inactive-state multicast configuration of the cell, and then receives the multicast service based on the multicast configuration of the cell. Re-obtaining the RRC inactive multicast configuration of the cell and then receiving the multicast causes temporary interruption of receiving the multicast service, consequently affecting continuity of the multicast service. In addition, when a serving cell of the terminal device has good coverage, an unnecessary cell selection procedure performed by the terminal device increases the power consumption of the terminal device.

In view of this, an embodiment of this application provides a communication method, for the terminal device to receive, in the RRC non-connected state, the multicast service via a serving cell of the terminal device in the RRC connected state.

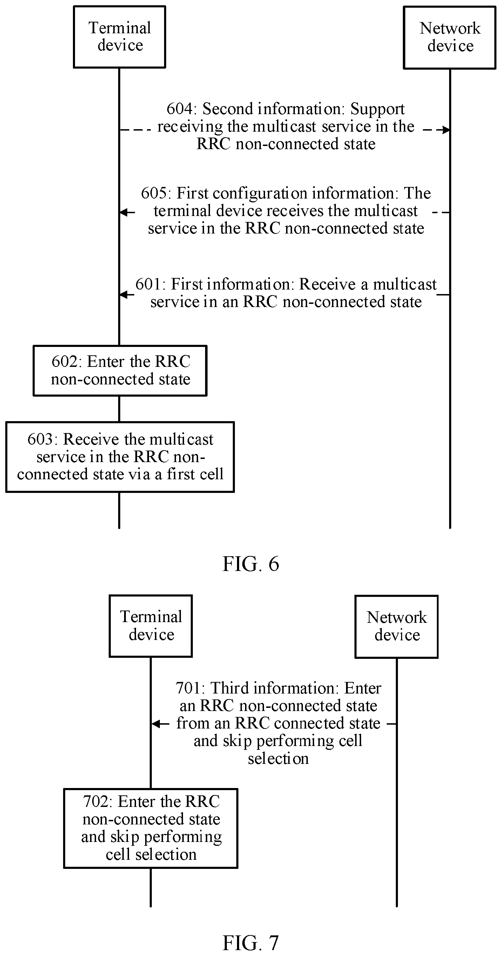

Based on the foregoing network architecture, FIG. 6 is a schematic flowchart of a communication method according to an embodiment of this application. As shown in FIG. 6, the communication method may include the following steps.

601: A network device sends first information to a first terminal device that is in an RRC connected state.

Correspondingly, the first terminal device receives the first information from the network device in the RRC connected state.

When there are a large quantity of terminal devices that perform RRC connected state communication with the network device, there are a large quantity of terminal devices that access a cell in which the terminal device is located and that are in the RRC connected state, or there are a large quantity of terminal devices that perform a multicast service in the RRC connected state and that are in a cell in which the terminal device is located, the network device may send the first information to the first terminal device that is in the RRC connected state.

It should be understood that the first terminal device is the terminal device in the claims and the summary. Herein, to distinguish a specific terminal device, the terminal device in the claims and the summary is referred to as the first terminal device.

That there are a large quantity of terminal devices that perform RRC connected state communication with the network device may be understood as that a quantity of terminal devices that perform RRC connected state communication with the network device is greater than a first threshold, or may be understood as that a ratio of a quantity of terminal devices that perform RRC connected state communication with the network device to a quantity of terminal devices that are in the RRC connected state and that can be accommodated by the network device is greater than a second threshold. The terminal device that performs RRC connected state communication with the network device may be understood as a terminal device that communicates with the network device and that is in the RRC connected state, or may be understood as a terminal device that establishes an RRC connection to the network device.

That there are a large quantity of terminal devices that access a cell in which the terminal device is located and that are in the RRC connected state may be understood as that a quantity of terminal devices that access the cell in which the terminal device is located and that are in the RRC connected state is greater than a third threshold, or may be understood as that a ratio of a quantity of terminal devices that access the cell in which the terminal device is located and that are in the RRC connected state to a quantity of terminal devices that are in the RRC connected state and that can be accommodated in the cell is greater than a fourth threshold.

That there are a large quantity of terminal devices that perform a multicast service in the RRC connected state and that are in a cell in which the terminal device is located may be understood as that a quantity of terminal devices that perform the multicast service in the RRC connected state and that are in the cell in which the terminal device is located is greater than a fifth threshold, or may be understood as that a ratio of a quantity of terminal devices that perform the multicast service in the RRC connected state and that are in the cell in which the terminal device is located to the quantity of terminal devices that are in the RRC connected state and that can be accommodated in the cell is greater than a sixth threshold.

It should be understood that the multicast service may also be referred to as a multicast session. The multicast service herein may be an MBS multicast service, or may be another multicast service. This is not limited herein.

It should be understood that the first terminal device is a terminal device that establishes the RRC connection to the network device, that is, a terminal device that communicates with the network device and that is in the RRC connected state. The first terminal device may be any terminal device that establishes the RRC connection to the network device. This indicates that, to alleviate network congestion, the network device may enable one or more terminal devices to receive the multicast service in an RRC non-connected state. Alternatively, the first terminal device may be a terminal device that establishes the RRC connection to the network device and that has good coverage. This indicates that, to alleviate the network congestion, the network device may enable one or more terminal devices with good coverage to receive the multicast service in the RRC non-connected state.

The first information indicates the first terminal device to receive the multicast service in the RRC non-connected state. The RRC non-connected state may be an RRC idle state, may be an RRC inactive state, or may be an RRC idle state and an RRC inactive state. The first information may be carried in an RRC release message, to be specific, the first information is sent to the first terminal device by using the RRC release message. In other words, the network device sends the RRC release message to the first terminal device, and the RRC release message includes the first information. The first information may alternatively be carried in an RRC reconfiguration message. The first information may alternatively be carried in another message or other signaling. This is not limited herein. The first information may be configuration information for configuring the first terminal device to receive the multicast service in the RRC non-connected state. The configuration information may include a multicast MRB configuration. The first information may also be other information. This is not limited herein.

Indicating the first terminal device to receive the multicast service in the RRC non-connected state may be understood as (or may be replaced with) indicating that a multicast service configuration of the first terminal device is used in the RRC non-connected state, may be understood as indicating that a multicast service of the first terminal device is in an active state or that the multicast service is not released, may be understood as indicating that a purpose of entering the RRC non-connected state by the first terminal device is to receive the multicast service, or may be understood as indicating that a multicast MRB of the first terminal device is not suspended or not released.

The first information may be indicated by using 1 bit (bit), a flag bit, or an indication bit. When the network device needs to send the first information to the first terminal device, the network device may send, to the first terminal device, a message or signaling that includes a bit, a flag bit, or an indication bit corresponding to the first information. Correspondingly, the first terminal device may receive the message or signaling that includes the bit, the flag bit, or the indication bit corresponding to the first information. When the network device does not need to send the first information to the first terminal device, the network device does not send, to the first terminal device, the message or signaling that includes the bit, the flag bit, or the indication bit corresponding to the first information. Correspondingly, the first terminal device cannot receive the message or signaling that includes the bit, the flag bit, or the indication bit corresponding to the first information.

Alternatively, the first information may be indicated by using 1 bit. For example, when the network device needs to send the first information to the first terminal device, a value of this bit is 1. When the network device does not need to send the first information to the first terminal device, the value of this bit is 0. The reverse is also true.

Alternatively, the first information may be indicated by using a plurality of bits. For example, when the network device needs to send the first information to the first terminal device, values of the plurality of bits are all 1. When the network device does not need to send the first information to the first terminal device, values of the plurality of bits are all 0.

The first information may indicate the first terminal device to receive the multicast service in the RRC non-connected state, but does not indicate to receive a specific multicast service or specific multicast services.

A multicast service that the first information indicates to receive may be a multicast service in an activated state and/or a multicast service that is being received by the terminal device.

The first information may alternatively indicate a specific multicast service or specific multicast services that are received by the first terminal device in the RRC non-connected state. In this case, the first information may indicate an identifier of the multicast service, or may indicate an identifier of the MRB. The multicast service herein is a multicast service that needs to be received by the first terminal device in the RRC non-connected state. The identifier of the multicast service may be a name of the multicast service, may be a TMGI corresponding to or associated with the multicast service, or may be an RNTI corresponding to or associated with the multicast service. The TMGI corresponding to or associated with the multicast service may be understood as a TMGI that identifies the multicast service. The RNTI corresponding to or associated with the multicast service may be understood as an RNTI used to scramble/or descramble the multicast service. The MRB is an MRB associated with the multicast service.

For example, the first information may indicate the first terminal device to receive a first multicast service in the RRC non-connected state. Indicating the first terminal device to receive the first multicast service in the RRC non-connected state may be understood as indicating that a first multicast service configuration is used in the RRC non-connected state, may be understood as indicating that the first multicast service is in the activated state or that the first multicast service is not released, may be understood as indicating that the purpose of entering the RRC non-connected state by the first terminal device is to receive the first multicast service, may be understood as indicating that an MRB corresponding to the first multicast service is not suspended or not released (in this case, one multicast service may correspond to one or more multicast MRBs), or may be understood as indicating that an MRB associated with the first multicast service is not suspended or not released.

602: The first terminal device enters the RRC non-connected state.

To release the first terminal device to the RRC non-connected state, the network device may send the RRC release message to the first terminal device that is in the RRC connected state. Correspondingly, the first terminal device may receive, in the RRC connected state, the RRC release message from the network device, and then may enter the RRC non-connected state based on the RRC release message, in other words, switch from the RRC connected state to the RRC non-connected state.

When the network device needs to release the first terminal device to the RRC inactive state, the RRC release message includes suspendConfig. When the network device needs to release the first terminal device to the RRC idle state, the RRC release message does not include suspendConfig. Therefore, after the first terminal device receives the RRC release message, when the RRC release message does not include suspendConfig, the first terminal device may enter the RRC idle state based on the RRC release message. When the RRC release message includes suspendConfig, the first terminal device may enter the RRC inactive state based on the RRC release message.

When the first information is not carried in the RRC release message, the network device may first send the first information to the first terminal device, and then may send the RRC release message to the first terminal device. Correspondingly, the first terminal device may first receive the first information, and then receive the RRC release message.

603: The first terminal device receives the multicast service in the RRC non-connected state via a first cell.

After entering the RRC non-connected state, the first terminal device may receive the multicast service in the RRC non-connected state via the first cell, in other words, may receive the multicast service in the RRC non-connected state via the first cell based on the first information.

The first cell is a serving cell of the first terminal device in the RRC connected state, and the serving cell may be a primary cell (primary cell, PCell), or may be a secondary cell (secondary cell, SCell). The serving cell of the first terminal device in the RRC connected state may be understood as a serving cell before an entry into the RRC non-connected state, may be understood as a serving cell in the RRC connected state before an entry into the RRC non-connected state, or may be understood as a cell in which the first terminal device is located when the first terminal device receives the RRC release message. The first terminal device may receive the multicast service in the RRC connected state via the first cell, or may not start to receive the multicast service in the RRC connected state, or may not receive the multicast service in the RRC connected state via the first cell.

When the first terminal device receives the multicast service in the RRC connected state via the first cell, the first cell may be a PCell of the first terminal device in the RRC connected state, or may be an SCell of the first terminal device in the RRC connected state. When the first terminal device does not start to receive the multicast service in the RRC connected state, or when the first terminal device does not receive the multicast service in the RRC connected state via the first cell, the first cell is the PCell of the first terminal device in the RRC connected state.

For example, when the first terminal device receives the first multicast service in the RRC connected state via a first secondary cell, after the first terminal device enters the RRC non-connected state from the RRC connected state, the first terminal device camps on the first secondary cell. After entering the RRC non-connected state, the first terminal device does not need to re-obtain an RRC non-connected-state multicast configuration of the first secondary cell, and a configuration for receiving the first multicast service in the first secondary cell in the RRC connected state may be used to receive the first multicast service in the RRC non-connected state. This can ensure continuity of receiving, by the first terminal device, the first multicast service in the first secondary cell.

When the first terminal device enters the RRC non-connected state from the RRC connected state, the first terminal device may not perform cell selection. It may be understood as that the first terminal device skips performing cell selection when the first terminal device enters the RRC non-connected state from the RRC connected state, or it may be understood as that the first terminal device skips performing cell selection after the first terminal device enters the RRC non-connected state from the RRC connected state.

That the first terminal device skips performing cell selection may be understood as that the first terminal device does not evaluate cell signal quality according to a cell selection criterion, and keeps camping on the first cell. However, after entering the RRC non-connected state, to ensure mobility of the first terminal device in the RRC non-connected state, the first terminal device still performs cell reselection, and performs cell reselection measurement, evaluation, and execution according to a cell reselection criterion.

That the first terminal device skips performing cell selection may also be understood as that when the first cell meets a camping condition, a camped cell is the first cell. Meeting the camping condition may include meeting an S criterion for cell camping. In a case, the first terminal device may first determine whether the first cell meets the camping condition, and when the first cell meets the camping condition, the first terminal device skips performing cell selection, and directly determines the first cell as the camped cell. When the first cell does not meet the camping condition, the first terminal device may perform cell selection. Herein, a process of determining whether the first cell meets the camping condition does not belong to a cell selection process. In another case, the first terminal device preferentially selects the first cell when performing cell selection, to be specific, the first terminal device still performs cell selection once after entering the RRC non-connected state, but preferentially determines whether the first cell meets the camping condition, and when the first cell meets the camping condition, the first terminal device determines that the camped cell is the first cell. When the first cell does not meet the camping condition, the first terminal device searches for another cell that meets the S criterion to attempt to camp on.

Optionally, the communication method may further include the following step:

604: The first terminal device sends second information to the network device.

Correspondingly, the network device receives the second information from the first terminal device.

When the terminal device does not support the multicast service that is in the RRC non-connected state, the network device sends the RRC release message to the terminal device due to cell congestion, to indicate the terminal device to enter the RRC non-connected state to receive the multicast service. The terminal device may perform cell selection, to request, in a neighboring cell, to enter the RRC connected state to receive the multicast service. A delay of re-establishing an RRC connection is long, and consequently, receiving of the multicast service is interrupted. Alternatively, the terminal device may request, again, to enter the RRC connected state to receive the multicast service from a network device of a serving cell on which the terminal device currently camps, and the network device may reject an RRC connection resume request of the terminal device again. This causes unnecessary signaling overheads. To avoid the foregoing problem, the first terminal device may send the second information to the network device. The second information indicates that receiving the multicast service in the RRC non-connected state is supported, in other words, indicates that the first terminal device supports receiving the multicast service in the RRC non-connected state. The first terminal device may report the second information to the network device by using capability information. For example, the first terminal device may send UE capability information (UE capability information) to the network device, and the UE capability information may include or carry the second information. Correspondingly, the network device may receive the UE capability information from the first terminal device, and then may obtain the second information from the UE capability information. Alternatively, the first terminal device may report the second information to the network device by using other information, message, or signaling. This is not limited herein.

When all terminal devices support receiving the multicast service in the RRC non-connected state, the first terminal device may not send the second information to the network device, in other words, step 604 is not performed. This can avoid unnecessary information transmission, to save a transmission resource. Correspondingly, the network device may send the first information to any terminal device that establishes the RRC connection to the network device.

When some terminal devices support receiving the multicast service in the RRC non-connected state, but some terminal devices do not support receiving the multicast service in the RRC non-connected state, to avoid a case in which the network device sends the first information to a terminal device that does not support receiving the multicast service in the RRC non-connected state, only a terminal device that supports receiving the multicast service in the RRC non-connected state may send the second information to the network device. In this case, the first terminal device may send the second information to the network device. Correspondingly, the network device may send the first information to the first terminal device based on the second information. The network device may send the first information to the first terminal device based on the second information.

Alternatively, the terminal device that supports receiving the multicast service in the RRC non-connected state may send the second information to the network device, and the terminal device that does not support receiving the multicast service in the RRC non-connected state may send fifth information to the network device. The fifth information indicates that receiving the multicast service in the RRC non-connected state is not supported. The network device may determine, based on the second information and the fifth information, specific terminal devices to which the first information is to be sent.

Optionally, the communication method may further include the following step:

605: The network device sends first configuration information to the first terminal device.

Correspondingly, the first terminal device receives the first configuration information from the network device.

The first configuration information may be used to configure the first terminal device to receive the multicast service in the RRC non-connected state. The first configuration information may be carried in an RRC reconfiguration message, or may be carried in another message or other signaling.

When the network device needs the first terminal device to receive the multicast service in the RRC non-connected state, the network device may send the first configuration information to the first terminal device, so that the first terminal device can receive the multicast service in the RRC non-connected state based on the first configuration information. Correspondingly, step 603 may be replaced with that the first terminal device receives the multicast service in the RRC non-connected state based on the first configuration information via the first cell.

The first configuration information may include a multicast MRB configuration, a multicast common frequency resource (common frequency resource, CFR) configuration, and the like. The multicast MRB configuration is used to configure an MRB that carries the multicast service, and the CFR configuration is used to configure a frequency resource for the multicast service. The first configuration information may be configuration information of one or more multicast services.

The first configuration information may be further used to configure the terminal device to receive the multicast service in the RRC connected state. In other words, the network device may send a set of multicast service configurations for a same multicast service, the set of multicast service configurations may be used in both the RRC connected state and the RRC non-connected state. In other words, in the RRC connected state and the RRC non-connected state, there is different configuration information for the same multicast service: configuration information 1 in the RRC connected state, and configuration information 2 in the RRC non-connected state. That the RRC connected state and the RRC non-connected state have different configuration information may be understood as that a part of multicast configuration parameters are the same, and a part of multicast configuration parameters are different. For example, the first configuration information may include a group of configuration parameters, and configuration parameters that are different between the RRC non-connected state and the RRC connected state are only a part of configuration parameters in the group of configuration parameters.

When the first configuration information is used only to configure the first terminal device to receive the multicast service in the RRC non-connected state, the network device may send the first configuration information to the first terminal device that is in the RRC connected state or the RRC non-connected state. When the first configuration information is used to configure the first terminal device to receive the multicast service in the RRC connected state and the RRC non-connected state, the network device may send the first configuration information to the first terminal device that is in the RRC connected state.

It can be learned that the terminal device may obtain, in the RRC connected state by using dedicated signaling, a multicast configuration that is in the RRC non-connected state. In this way, if the terminal device still camps on the current cell after entering the RRC non-connected state, the terminal device does not need to re-obtain the multicast configuration that is in the RRC non-connected state, to improve efficiency of receiving the multicast service. When a multicast service that the terminal device wants to receive in the RRC connected state is activated, or the terminal device already starts to receive the multicast service in the RRC connected state, the terminal device may obtain, in the RRC connected state, configuration information of the multicast service that is in the RRC non-connected state, so that after entering the RRC non-connected state from the RRC connected state, the terminal device does not need to obtain, in the serving cell, the configuration information of the multicast service that is in the RRC non-connected state again, but receives the multicast service by using the configuration information that is of the multicast service in the RRC non-connected state and that is received in the RRC connected state. In this way, continuity of the multicast service can be improved.

When all the terminal devices support receiving the multicast service in the RRC non-connected state, the network device may directly send the first configuration information to the first terminal device.

When a terminal device does not support receiving the multicast service in the RRC non-connected state, the network device may send the first configuration information to the terminal device based on the second information or the fifth information reported by the terminal device. The network device sends the first configuration information to the first terminal device only when the first terminal device supports receiving the multicast service in the RRC non-connected state, that is, the first terminal device reports the second information. This can avoid configuring, for a terminal device that does not support receiving the multicast service in the RRC non-connected state, configuration information used to receive the multicast service in the RRC non-connected state.

Optionally, the communication method may further include: The first terminal device obtains system information from the network device, where the system information is system information needed in the RRC non-connected state.

When the first terminal device enters the RRC non-connected state from the RRC connected state and skips performing cell selection, the first cell needs to perform a system information obtaining procedure once, to obtain system information needed by the first terminal device in the RRC non-connected state.

Generally, the terminal device enters the RRC non-connected state from the RRC connected state, and performs the system information obtaining procedure after performing cell selection. Because the first terminal device skips performing cell selection, to avoid a case in which the first terminal device cannot obtain the system message used in the RRC non-connected state, the first terminal device needs to re-obtain the system message in the first cell once after entering the RRC non-connected state. If the first terminal device does not re-obtain the system message, the first terminal device cannot correctly perform cell reselection. For example, a system message related to the cell reselection, like a SIB 2/SIB 3/SIB 4/SIB 5, is not broadcast by the network device before the first terminal device enters the RRC non-connected state, and consequently, the first terminal device does not have the system information needed in the RRC non-connected state.

Based on the foregoing network architecture, FIG. 7 is a schematic flowchart of another communication method according to an embodiment of this application. As shown in FIG. 7, the communication method may include the following steps.

701: A network device sends third information to a first terminal device that is in an RRC connected state.

Correspondingly, the first terminal device receives the third information from the network device in the RRC connected state.

When the first terminal device needs to receive a multicast service in an RRC non-connected state, or in another scenario or case in which the first terminal device is not expected to enter the RRC non-connected state from the RRC connected state and perform cell selection, causing cell handover, the network device may send the third information to the first terminal device that is in the RRC connected state.

The first terminal device is a terminal device that establishes an RRC connection to the network device, that is, a terminal device that communicates with the network device and that is in the RRC connected state. The first terminal device may be any terminal device that establishes the RRC connection to the network device, or may be a terminal device that establishes the RRC connection to the network device and that has good coverage.

The third information indicates to enter the RRC non-connected state from the RRC connected state and skip performing cell selection. The RRC non-connected state may be an RRC idle state, may be an RRC inactive state, or may be an RRC idle state and an RRC inactive state. The third information may be carried in an RRC release message, may be carried in an RRC reconfiguration message, or may be carried in another message or other signaling.

In a case, when the network device needs the first terminal device to enter the RRC non-connected state from the RRC connected state and skip performing cell selection, the network device may send the third information to the first terminal device. When the network device needs the first terminal device to enter the RRC non-connected state from the RRC connected state and perform cell selection, the network device may not send the third information to the first terminal device. For example, the third information may be indicated by using 1 bit, a flag bit, or an indication bit. When the network device needs the first terminal device to enter the RRC non-connected state from the RRC connected state and skip performing cell selection, the RRC release message or the RRC reconfiguration message may include the 1 bit, the flag bit, or the indication bit. When the network device needs the first terminal device to enter the RRC non-connected state from the RRC connected state and perform cell selection, the RRC release message or the RRC reconfiguration message does not include the 1 bit, the flag bit, or the indication bit.

In another case, when the network device needs the first terminal device to enter the RRC non-connected state from the RRC connected state and skip performing cell selection, the network device may send the third information to the first terminal device. When the network device needs the first terminal device to enter the RRC non-connected state from the RRC connected state and perform cell selection, the network device may send sixth information to the first terminal device. The sixth information indicates to enter the RRC non-connected state from the RRC connected state and perform cell selection. In other words, the network device may indicate the first terminal device to enter the RRC non-connected state from the RRC connected state and perform cell selection or skip performing cell selection. For example, 1 bit may indicate the third information or the sixth information. When the network device needs the first terminal device to enter the RRC non-connected state from the RRC connected state and skip performing cell selection, a value of this bit in the RRC release message or the RRC reconfiguration message is 1, and it indicates that the network device sends the third information to the first terminal device. When the network device needs the first terminal device to enter the RRC non-connected state from the RRC connected state and perform cell selection, a value of this bit in the RRC release message or the RRC reconfiguration message is 0, and it indicates that the network device sends the sixth information to the first terminal device.

702: The first terminal device enters the RRC non-connected state.

To release the first terminal device to the RRC non-connected state, the network device may send the RRC release message to the first terminal device that is in the RRC connected state. Correspondingly, the first terminal device may receive, in the RRC connected state, the RRC release message from the network device, and then may enter the RRC non-connected state based on the RRC release message.

When the third information is not carried in the RRC release message, the network device may first send the third information to the first terminal device, and then may send the RRC release message to the first terminal device. Correspondingly, the first terminal device may first receive the third information, and then receive the RRC release message.

The first terminal device enters the RRC non-connected state from the RRC connected state and skips performing cell selection. For detailed descriptions of skipping performing cell selection by the first terminal device, refer to related descriptions in step 603. Details are not described herein again.

In this embodiment, the terminal device enters the RRC non-connected state from the RRC connected state and skips performing cell selection. This can avoid interruption of receiving the multicast service when the terminal device enters the RRC non-connected state from the RRC connected state and performs cell selection, improve continuity of the multicast service, and reduce power consumption of searching for a cell in a cell selection process, to reduce power consumption of the terminal device.

The communication method corresponding to FIG. 7 may be used independently, or may be used in combination with the communication method corresponding to FIG. 6. When FIG. 6 and FIG. 7 are used in combination, when the network device sends the third information or the sixth information to the first terminal device, the first terminal device determines, based on the third information or the sixth information, whether to perform cell selection, instead of determining, based on first information, whether to perform cell selection. For example, when the RRC release message includes the first information and the third information, the first terminal device skips performing cell selection. When the RRC release message includes the first information but does not include the third information, or includes the first information and the sixth information, the first terminal device performs cell selection. It can be learned that, when a protocol stipulates that the third information indicates the terminal device to skip performing cell selection, if the third information is not received, it means that the terminal device performs cell selection, instead of skipping, based on the first information, performing cell selection.

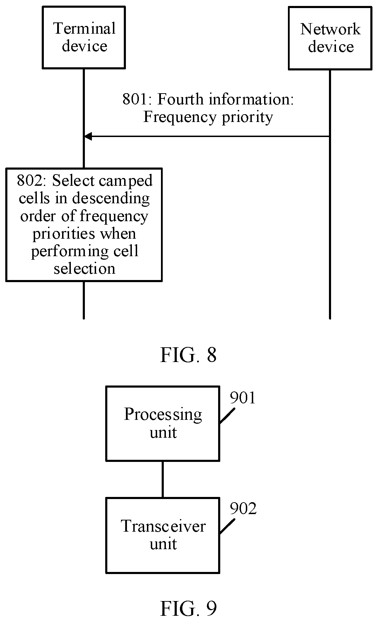

Based on the foregoing network architecture, FIG. 8 is a schematic flowchart of another communication method according to an embodiment of this application. As shown in FIG. 8, the communication method may include the following steps.

801: A network device sends, to a first terminal device that is in an RRC connected state, fourth information indicating a frequency priority.

Correspondingly, the first terminal device receives, in the RRC connected state, the fourth information that indicates the frequency priority and that is from the network device.

When the network device needs to release the first terminal device to an RRC non-connected state, the network device may send the fourth information to the first terminal device that is in the RRC connected state. The first terminal device may be any terminal device that establishes an RRC connection to the network device, that is, any terminal device that communicates with the network device and that is in the RRC connected state.

The fourth information indicates the frequency priority. The network device may broadcast the fourth information to the first terminal device (for example, the fourth information is included in a system message, or the fourth information is included in an MCCH message), or may send the fourth information to the first terminal device by using an RRC release message.

The frequency priority is a priority of a frequency. The frequency herein is a frequency of a cell. The frequency of the cell is an operating frequency of the cell.

802: The first terminal device selects a camped cell in descending order of frequency priorities when performing cell selection.

To release the first terminal device to the RRC non-connected state, the network device may send the RRC release message to the first terminal device that is in the RRC connected state. Correspondingly, the first terminal device may receive, in the RRC connected state, the RRC release message from the network device, and then may enter the RRC non-connected state based on the RRC release message.

When first information is not carried in the RRC release message, the network device may first send the fourth information to the first terminal device, and then may send the RRC release message to the first terminal device. Correspondingly, the first terminal device may first receive the fourth information, and then receive the RRC release message.

When the first terminal device enters the RRC non-connected state from the RRC connected state and performs cell selection, the first terminal device may select the camped cell in descending order of the frequency priorities. Frequencies in the frequency priorities may be arranged in descending order. Therefore, the first terminal device may preferentially determine whether there is a cell that meets an S criterion in a cell corresponding to a highest frequency priority. If there is a cell that meets the S criterion in the cell corresponding to the highest frequency priority, the first terminal device may select the cell that meets the S criterion, or if there is no cell that meets the S criterion in the cell corresponding to the highest frequency priority, the first terminal device may continue to determine whether there is a cell that meets the S criterion in a cell corresponding to a second frequency priority; and so on. For cells corresponding to a same frequency priority, an order of performing cell selection by the first terminal device may be randomly determined, may be determined based on distances between the first terminal device and the cells, or may be determined in another manner. This is not limited herein.

The frequency priority may include one or more frequency lists. Frequencies in a same frequency list have a same priority, and frequencies in different frequency lists have different priorities. For example, the frequency priority may include one high-priority frequency list, one or more frequencies in the frequency list are considered as a high priority, and another frequency is considered as a low priority. For example, the frequency priority may include one high-priority frequency list and one low-priority frequency list. For example, the high-priority frequency list may be: {frequency 1, frequency 2}. When performing cell selection, the terminal device may preferentially select cells corresponding to the frequency 1 and the frequency 2. For example, the frequency priority may include one high-priority frequency list, one medium-priority frequency list, and one low-priority frequency list. The first terminal device may perform selection based on the high-priority frequency list, the medium-priority frequency list, and the low-priority frequency list. For example, the frequency priority may include M frequency lists: 1, 2, ..., and M. A higher number may correspond to a higher priority, or a higher number may correspond to a lower priority. M is an integer greater than or equal to 1. When M is greater than 1, the network device may indicate the M priorities by using $\lceil \ln M \rceil$ bits.

The frequency priority may also include one frequency list. Different frequencies in the frequency list may correspond to different priorities, or may correspond to a same priority. For example, the frequency list may be shown in Table 1 and Table 2.

Table 1

| Frequency information | Priority |
|---|---|
| Frequency 1 | Priority 1 |
| ... | ... |
| Frequency N | Priority N |

Table 2

| Frequency information | Priority |
|---|---|
| Frequency 1 | Priority 1 |
| Frequency 2 | Priority 2 |
| Frequency 3 | |
| ... | ... |
| Frequency A | Priority B |

N, A, and B are integers greater than or equal to 1.

The communication method corresponding to FIG. 8 may be used independently, or may be used in combination with the communication method corresponding to FIG. 6 and/or FIG. 7. In a case of combined use, a priority of a frequency corresponding to a first cell in the frequency priorities may be the highest priority, so that the first terminal device preferentially selects the first cell. This can avoid multicast service interruption and reduce energy consumption of the first terminal device.

In the case of combined use, the network device may centralize terminal devices that receive multicast in the RRC non-connected state to a specific frequency, for example, centralize the terminal devices to a frequency/cell that a multicast service that is in the RRC non-connected state can be provided. In one aspect, this can avoid a case in which the multicast is interrupted because the terminal device selects a cell that does not support the multicast service that is in the RRC non-connected state. The cell that does not support the multicast service that is in the RRC non-connected state may include a cell that supports the multicast service but supports providing the multicast service only in the RRC connected state, or may include a cell that cannot provide the multicast service. In the former case, after camping on the cell, the terminal device needs to trigger a request to establish the RRC connection to enter the RRC connected state to receive the multicast service, and this causes the multicast service interruption. In the latter case, after camping on the cell, the terminal device also needs to trigger the request to establish the RRC connection. After entering the RRC connected state, the terminal device may trigger to establish a unicast PDU session with a multicast server to receive the multicast service. In another aspect, this can avoid a case in which the terminal device performs blind cell selection, to reduce power consumption overheads of the terminal device. In still another aspect, from a perspective of a network, this also helps reduce network power consumption, and reduce resource overheads and signaling overheads for providing the multicast service that is in the RRC non-connected state by the network. For example, the network may provide, only on a specific frequency/in a specific cell, the multicast service that is in the RRC non-connected state, and does not need to provide the multicast service that is in the RRC non-connected state in another cell.

In another scenario, the network device may determine, for a corresponding requirement, a priority of a frequency corresponding to a cell that meets the requirement as a higher priority.

It should be understood that same or corresponding information in the foregoing different embodiments or different locations may be mutually referenced in some cases.

It should be understood that a function performed by the network device in the foregoing communication method may also be performed by a module (for example, a chip) in the network device, or may be performed by a logical module or software that can implement all or some functions of the network device. A function performed by the terminal device may also be performed by a module (for example, a chip) in the terminal device, or may be performed by a logical module or software that can implement all or some functions of the terminal device.

Based on the foregoing network architecture, FIG. 9 is a diagram of a structure of a communication apparatus according to an embodiment of this application. As shown in FIG. 9, the communication apparatus may include a processing unit 901 and a transceiver unit 902.

In a case, the communication apparatus may be a terminal device, or may be a chip, a chip system, or a processor that supports the terminal device in implementing the method, or may be a logical module or software that can implement all or some functions of the terminal device. For detailed descriptions of the processing unit 901 and the transceiver unit 902, refer to the descriptions in the seventh aspect of the summary. For more detailed descriptions of the processing unit 901 and the transceiver unit 902, directly refer to related descriptions of the first terminal device in the method embodiments shown in FIG. 6 to FIG. 8. Details are not described herein.

In another case, the communication apparatus may be a network device, or may be a chip, a chip system, or a processor that supports the network device in implementing the method, or may be a logical module or software that can implement all or some functions of the network device. For detailed descriptions of the processing unit 901 and the transceiver unit 902, refer to the descriptions in the eighth aspect of the summary. For more detailed descriptions of the processing unit 901 and the transceiver unit 902, directly refer to related descriptions of the network device in the method embodiments shown in FIG. 6 to FIG. 8. Details are not described herein.

In still another case, the communication apparatus may be a terminal device, or may be a chip, a chip system, or a processor that supports the terminal device in implementing the method, or may be a logical module or software that can implement all or some functions of the terminal device. For detailed descriptions of the processing unit 901 and the transceiver unit 902, refer to the descriptions in the ninth aspect of the summary. For more detailed descriptions of the processing unit 901 and the transceiver unit 902, directly refer to related descriptions of the first terminal device in the method embodiment shown in FIG. 7. Details are not described herein.

In still another case, the communication apparatus may be a network device, or may be a chip, a chip system, or a processor that supports the network device in implementing the method, or may be a logical module or software that can implement all or some functions of the network device. For detailed descriptions of the processing unit 901 and the transceiver unit 902, refer to the descriptions in the tenth aspect of the summary. For more detailed descriptions of the processing unit 901 and the transceiver unit 902, directly refer to related descriptions of the network device in the method embodiment shown in FIG. 7. Details are not described herein.

In still another case, the communication apparatus may be a terminal device, or may be a chip, a chip system, or a processor that supports the terminal device in implementing the method, or may be a logical module or software that can implement all or some functions of the terminal device. For detailed descriptions of the processing unit 901 and the transceiver unit 902, refer to the descriptions in the eleventh aspect of the summary. For more detailed descriptions of the processing unit 901 and the transceiver unit 902, directly refer to related descriptions of the first terminal device in the method embodiment shown in FIG. 8. Details are not described herein.

In still another case, the communication apparatus may be a network device, or may be a chip, a chip system, or a processor that supports the network device in implementing the method, or may be a logical module or software that can implement all or some functions of the network device. For detailed descriptions of the processing unit 901 and the transceiver unit 902, refer to the descriptions in the twelfth aspect of the summary. For more detailed descriptions of the processing unit 901 and the transceiver unit 902, directly refer to related descriptions of the network device in the method embodiment shown in FIG. 8. Details are not described herein.

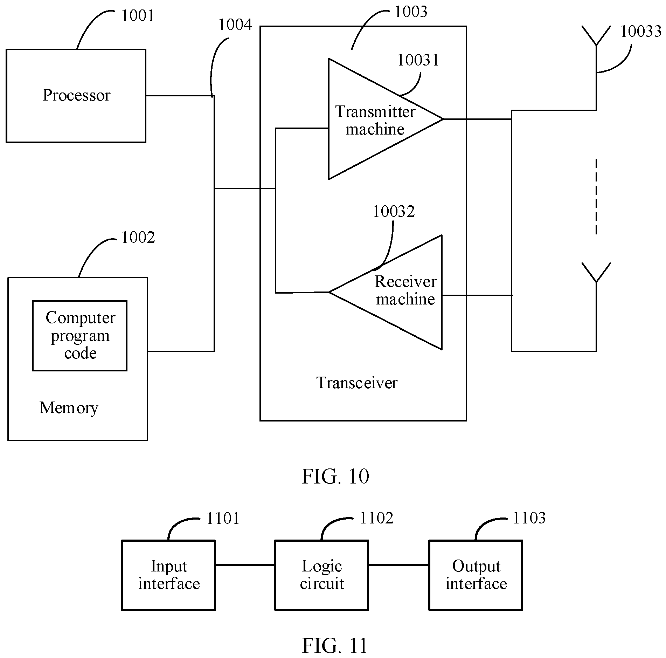

Based on the foregoing network architecture, FIG. 10 is a diagram of a structure of another communication apparatus according to an embodiment of this application. As shown in FIG. 10, the communication apparatus may include a processor 1001, a memory 1002, a transceiver 1003, and a bus 1004. The memory 1002 may exist independently, and may be connected to the processor 1001 through the bus 1004. Alternatively, the memory 1002 may be integrated with the processor 1001. The bus 1004 is configured to implement connections between these components. In a case, as shown in FIG. 10, the transceiver 1003 may include a transmitter machine 10031, a receiver machine 10032, and an antenna 10033. In another case, the transceiver 1003 may include a transmitter (namely, an output interface) and a receiver (namely, an input interface). The transmitter may include a transmitter machine and an antenna, and the receiver may include a receiver machine and an antenna.

The communication apparatus may be a terminal device, or may be a module in the terminal device. When computer program instructions stored in the memory 1002 are executed, the processor 1001 is configured to perform an operation performed by the processing unit 901 in the foregoing embodiment, and the transceiver 1003 is configured to perform an operation performed by the transceiver unit 902 in the foregoing embodiment. The communication apparatus may be further configured to perform various methods performed by the first terminal device in the method embodiments in FIG. 6 to FIG. 8. Details are not described again.

The communication apparatus may be a network device, or may be a module in the network device. When the computer program instructions stored in the memory 1002 are executed, the processor 1001 is configured to perform the operation performed by the processing unit 901 in the foregoing embodiment, and the transceiver 1003 is configured to perform the operation performed by the transceiver unit 902 in the foregoing embodiment. The communication apparatus may be further configured to perform various methods performed by the network device in the method embodiments in FIG. 6 to FIG. 8. Details are not described again.

Based on the foregoing network architecture, FIG. 11 is a diagram of a structure of still another communication apparatus according to an embodiment of this application. As shown in FIG. 11, the communication apparatus may include an input interface 1101, a logic circuit 1102, and an output interface 1103. The input interface 1101 is connected to the output interface 1103 through the logic circuit 1102. The input interface 1101 is configured to receive information from another communication apparatus, and the output interface 1103 is configured to: output, schedule, or send information to the another communication apparatus. The logic circuit 1102 is configured to perform an operation other than the operations of the input interface 1101 and the output interface 1103, for example, implement a function implemented by the processor 1001 in the foregoing embodiment. The communication apparatus may be a terminal device (or a module in the terminal device), or may be a network device (or a module in the network device). For more detailed descriptions of the input interface 1101, the logic circuit 1102, and the output interface 1103, directly refer to related descriptions of the first terminal device and the network device in the foregoing method embodiments. Details are not described herein.

An embodiment of this application further discloses a computer-readable storage medium storing instructions. When the instructions are executed, the method in the foregoing method embodiments is performed.

An embodiment of this application further discloses a computer program product including instructions. When the instructions are executed, the method in the foregoing method embodiments is performed.

An embodiment of this application further discloses a communication system. The communication system may include a network device and a terminal device. For specific descriptions, refer to the communication methods shown in FIG. 6 to FIG. 8.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.


**Claims**

1. A communication method, wherein the method is applied to a terminal device and comprises:

   receiving first information from a network device in a radio resource control RRC connected state, wherein the first information indicates the terminal device to receive a multicast service in an RRC non-connected state;
   entering the RRC non-connected state; and
   receiving the multicast service in the RRC non-connected state via a first cell, wherein the first cell is a serving cell of the terminal device in the RRC connected state.

2. The method according to claim 1, wherein the terminal device enters the RRC non-connected state from the RRC connected state and skips performing cell selection.

3. The method according to claim 2, wherein skipping performing cell selection comprises:
   when the first cell meets a camping condition, a camped cell is the first cell.

4. The method according to any one of claims 1 to 3, wherein the first information is carried in an RRC release message, and the entering the RRC non-connected state comprises:
   entering the RRC non-connected state based on the RRC release message.

5. The method according to any one of claims 1 to 4, wherein the first information indicates an identifier of the multicast service or an identifier of a multicast broadcast service radio bearer MRB, and the MRB is an MRB associated with the multicast service.

6. The method according to any one of claims 1 to 5, wherein the method further comprises:

   receiving first configuration information from the network device, wherein the first configuration information is used to configure the terminal device to receive the multicast service in the RRC non-connected state; and
   the receiving the multicast service in the RRC non-connected state via a first cell comprises:
   receiving the multicast service in the RRC non-connected state via the first cell based on the first configuration information.

7. The method according to any one of claims 1 to 6, wherein the method further comprises:
   sending second information to the network device, wherein the second information indicates that receiving the multicast service in the RRC non-connected state is supported.

8. A communication method, wherein the method is applied to a network device and comprises:
   sending first information to a terminal device that is in a radio resource control RRC connected state, wherein the first information indicates the terminal device to receive a multicast service in an RRC non-connected state, the first information is used by the terminal device to receive the multicast service in the RRC non-connected state via a first cell, and the first cell is a camped cell of the terminal device in the RRC connected state.

9. The method according to claim 8, wherein the first information is further used by the terminal device to enter the RRC non-connected state from the RRC connected state and skip performing cell selection.

10. The method according to claim 9, wherein skipping performing cell selection comprises:

when the first cell meets a camping condition, a camped cell is the first cell.

11. The method according to any one of claims 8 to 10, wherein the first information is carried in an RRC release message, and the RRC release message is used by the terminal device to enter the RRC non-connected state.

12. The method according to any one of claims 8 to 11, wherein the first information indicates an identifier of the multicast service or an identifier of a multicast broadcast service radio bearer MRB, and the MRB is an MRB associated with the multicast service.

13. The method according to any one of claims 8 to 12, wherein the method further comprises:
sending first configuration information to the terminal device, wherein the first configuration information is used to configure the terminal device to receive the multicast service in the RRC non-connected state.

14. The method according to any one of claims 8 to 13, wherein the method further comprises:
receiving second information from the terminal device, wherein the second information indicates that receiving the multicast service in the RRC non-connected state is supported.

15. A communication apparatus, wherein the apparatus is used in a terminal device and comprises:

a transceiver unit, configured to receive first information from a network device in a radio resource control RRC connected state, wherein the first information indicates the terminal device to receive a multicast service in an RRC non-connected state; and
a processing unit, configured to enter the RRC non-connected state, wherein
the processing unit is further configured to receive the multicast service in the RRC non-connected state via a first cell, wherein the first cell is a serving cell of the terminal device in the RRC connected state.

16. The apparatus according to claim 15, wherein the terminal device enters the RRC non-connected state from the RRC connected state and skips performing cell selection.

17. The apparatus according to claim 16, wherein skipping performing cell selection comprises:
when the first cell meets a camping condition, a camped cell is the first cell.

18. The apparatus according to any one of claims 15 to 17, wherein the first information is carried in an RRC release message, and the processing unit is specifically configured to:
enter the RRC non-connected state based on the RRC release message.

19. The apparatus according to any one of claims 15 to 18, wherein the first information indicates an identifier of the multicast service or an identifier of a multicast broadcast service radio bearer MRB, and the MRB is an MRB associated with the multicast service.

20. The apparatus according to any one of claims 15 to 19, wherein the transceiver unit is further configured to receive first configuration information from the network device, wherein the first configuration information is used to configure the terminal device to receive the multicast service in the RRC non-connected state; and
that the processing unit receives the multicast service in the RRC non-connected state via a first cell comprises:
receiving the multicast service in the RRC non-connected state via the first cell based on the first configuration information.

21. The apparatus according to any one of claims 15 to 20, wherein the transceiver unit is further configured to send second information to the network device, wherein the second information indicates that receiving the multicast service in the RRC non-connected state is supported.

22. A communication apparatus, wherein the apparatus is used in a network device and comprises a processing unit and a transceiver unit, wherein
the transceiver unit is configured to send, under control of the processing unit, first information to a terminal device that is in a radio resource control RRC connected state, wherein the first information indicates the terminal device to receive a multicast service in an RRC non-connected state, the first information is used by the terminal device to receive the multicast service in the RRC non-connected state via a first cell, and the first cell is a camped cell of the terminal device in the RRC connected state.

23. The apparatus according to claim 22, wherein the first information is further used by the terminal device to enter the RRC non-connected state from the RRC connected state and skip performing cell selection.

24. The apparatus according to claim 23, wherein skipping performing cell selection comprises: when the first cell meets a camping condition, a camped cell is the first cell.

25. The apparatus according to any one of claims 22 to 24, wherein the first information is carried in an RRC release message, and the RRC release message is used by the terminal device to enter the RRC non-connected state.

26. The apparatus according to any one of claims 22 to 25, wherein the first information indicates an identifier of the multicast service or an identifier of a multicast broadcast service radio bearer MRB, and the MRB is an MRB associated with the multicast service.

27. The apparatus according to any one of claims 22 to 26, wherein the transceiver unit is further configured to send first configuration information to the terminal device under the control of the processing unit, wherein the first configuration information is used to configure the terminal device to receive the multicast service in the RRC non-connected state.

28. The apparatus according to any one of claims 22 to 27, wherein the transceiver unit is further configured to receive second information from the terminal device under the control of the processing unit, wherein the second information indicates that receiving the multicast service in the RRC non-connected state is supported.

29. A communication apparatus, comprising a processor and a memory, wherein the processor is coupled to the memory, and the processor invokes a computer program stored in the memory to implement the method according to any one of claims 1 to 14.

30. A computer-readable storage medium, wherein the computer-readable storage medium stores a computer program or computer instructions, and when the computer program or the computer instructions are run by a processor, the method according to any one of claims 1 to 14 is implemented.

31. A computer program product, wherein the computer program product comprises computer program code, and when the computer program code is run by a processor, the method according to any one of claims 1 to 14 is implemented.

FIG. 1

AMF: Access and mobility management function
UPF: User plane function
5GC: 5G core network
gNB: Next generation NodeB
ng-eNB: Next generation evolved NodeB
NG-RAN: Next generation radio access network

FIG. 2

MME: Mobility management entity
S-GW: Serving gateway
eNB: Evolved NodeB
E-UTRAN: Evolved universal mobile telecommunications
system terrestrial radio access network

FIG. 3

MME/S-GW
MME/S-GW

EPC

S1-U    S1-U

S1-U
S1-U

S1    S1    S1    S1

X2-U

en-gNB
en-gNB

E-UTRAN

X2
X2

X2

eNB
eNB

MME: Mobility management entity
S-GW: Serving gateway
eNB: Evolved NodeB
E-UTRAN: Evolved universal mobile telecommunications
system terrestrial radio access network
EPC: Evolved packet core
en-gNB: E-UTRAN new radio next generation NodeB

FIG. 4

gNB/eNB: Next generation
NodeB/Evolved NodeB
PCell: Primary cell
SCell: Secondary cell
UE: User equipment

FIG. 5

Terminal device

Network device

604: Second information: Support
receiving the multicast service in the
RRC non-connected state

605: First configuration information: The
terminal device receives the multicast
service in the RRC non-connected state

601: First information: Receive a multicast
service in an RRC non-connected state

602: Enter the RRC
non-connected state

603: Receive the multicast
service in the RRC non-
connected state via a first cell

FIG. 6

Terminal device

Network device

701: Third information: Enter
an RRC non-connected state
from an RRC connected state
and skip performing cell
selection

702: Enter the RRC
non-connected state
and skip performing
cell selection

FIG. 7

Terminal device

Network device

801: Fourth information:
Frequency priority

802: Select camped
cells in descending
order of frequency
priorities when
performing cell
selection

FIG. 8

Processing
unit                901

Transceiver
unit               902

FIG. 9

1001

1004

1003

10033

Processor

Transmitter
machine

10031

10032

Receiver
machine

1002

Computer
program
code

Memory

Transceiver

FIG. 10

1101

1102

1103

Input
interface

Logic
circuit

Output
interface

FIG. 11

## INTERNATIONAL SEARCH REPORT

| International application No. |
|---|
| **PCT/CN2023/104264** |

### A. CLASSIFICATION OF SUBJECT MATTER

H04W 4/06(2009.01)i

According to International Patent Classification (IPC) or to both national classification and IPC

### B. FIELDS SEARCHED

Minimum documentation searched (classification system followed by classification symbols)

IPC:H04W 4/-

Documentation searched other than minimum documentation to the extent that such documents are included in the fields searched

Electronic data base consulted during the international search (name of data base and, where practicable, search terms used)

CNABS; CNTXT; CNKI: 多播, 组播, 非连接, 空闲, RRC, 服务, 小区, 小区选择 VEN; EPTXT; WOTXT; USTXT; IEEE; 3GPP: RRC; IDLE; INACTIVE+; CONNECTED; SERVIC+; MBS; MRB;

### C. DOCUMENTS CONSIDERED TO BE RELEVANT

| Category* | Citation of document, with indication, where appropriate, of the relevant passages | Relevant to claim No. |
|---|---|---|
| Y | HUAWEI et al. "R1-2005272, Discussion on multicast support for IDLE/INACTIVE UEs" *3GPP TSG RAN WG1 Meeting #102-e*, 08 August 2020 (2020-08-08), sections 1 and 2 | 1-31 |
| Y | CN 112218369 A (APPLE INC.) 12 January 2021 (2021-01-12) claims 1-20 | 1-31 |
| A | CN 113207094 A (DATANG MOBILE COMMUNICATIONS EQUIPMENT CO., LTD.) 03 August 2021 (2021-08-03) entire document | 1-31 |
| A | CN 110401922 A (HUAWEI TECHNOLOGIES CO., LTD.) 01 November 2019 (2019-11-01) entire document | 1-31 |
| A | WO 2022054876 A1 (TOYOTA JIDOSHA KABUSHIKI KAISHA) 17 March 2022 (2022-03-17) entire document | 1-31 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 September 2023** | **12 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 539 511 A1

## INTERNATIONAL SEARCH REPORT
### Information on patent family members

International application No.

**PCT/CN2023/104264**

| Patent document cited in search report | | | Publication date (day/month/year) | Patent family member(s) | | | Publication date (day/month/year) |
|---|---|---|---|---|---|---|---|
| CN | 112218369 | A | 12 January 2021 | DE | 102020208672 | A1 | 14 January 2021 |
| | | | | US | 2021014926 | A1 | 14 January 2021 |
| | | | | US | 11252778 | B2 | 15 February 2022 |
| | | | | US | 2022124866 | A1 | 21 April 2022 |
| CN | 113207094 | A | 03 August 2021 | WO | 2021155710 | A1 | 12 August 2021 |
| | | | | CN | 113207094 | B | 13 May 2022 |
| | | | | EP | 4102861 | A1 | 14 December 2022 |
| | | | | US | 2023054043 | A1 | 23 February 2023 |
| CN | 110401922 | A | 01 November 2019 | WO | 2019206075 | A1 | 31 October 2019 |
| | | | | CN | 110401922 | B | 30 March 2021 |
| WO | 2022054876 | A1 | 17 March 2022 | EP | 4211934 | A1 | 19 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210899957